# EUROPÄISCHE PATENTANMELDUNG

(11) **EP 4 491 544 A2**
(43) Veröffentlichungstag der Anmeldung: **15.01.2025**
(21) Anmeldenummer: 24186902.3
(22) Anmeldetag: 05.07.2024
(51) Int. Cl.: B65G 21/14, B65G 47/53, B65G 47/96

(54) **FÖRDERANORDNUNG UND VERFAHREN ZUM BETREIBEN EINER FÖRDERANORDNUNG**

(30) Priorität: 13.07.2023 CH 7532023
(71) Anmelder: FERAG AG, 8340 Hinwil (CH)
(72) Erfinder: BRETZ, Markus, 8340 Hinwil (CH); FENILE, Roberto, 8340 Hinwil (CH); BEUTLER, Simon, 8340 Hinwil (CH)
(74) Vertreter: Frei Patent Attorneys

(57) **Zusammenfassung**

Die Erfindung betrifft eine Förderanordnung (1), enthaltend eine Zufördereinrichtung (10) mit mindestens einem flächenförmigen Förderorgan (11), ferner eine Übergabefördereinrichtung (20) mit mindestens einem flächenförmigen Förderorgan (21) sowie eine Steuerungseinrichtung (40) zum ausrichtungstreuen Abgeben von liegend geförderten Fördergütern (2) von der Zufördereinrichtung (10) an die Übergabefördereinrichtung (20), wobei die Zufördereinrichtung (10) eine Positioniervorrichtung (50) mit einem in Förderrichtung (F1) der Zufördereinrichtung (10) über das Förderorgan (21) der Übergabefördereinrichtung (20) in eine Übergabeposition (UP) ausfahrbaren, flächenförmigen Positionierelement (51) zum Positionieren des abzugebenden Förderguts (2) über dem Förderorgan (21) der Übergabefördereinrichtung (20) aufweist. Die Positioniervorrichtung (50) ist so ausgelegt, dass das flächige Positionierelement (51) in der Übergabeposition (UP) unter der Last eines diesem aufliegenden Fördergutes (2) dem Förderorgan (21) der Übergabefördereinrichtung (20) aufliegt und durch das Förderorgan (21) von unten gestützt wird.

## Beschreibung

Die Erfindung liegt auf dem Gebiet der Fördertechnik, insbesondere der Fördertechnik für Intralogistik. Die Erfindung betrifft eine Förderanordnung mit einer Zufördereinrichtung, umfassend ein flächenförmiges Förderorgan, sowie eine Übergabefördereinrichtung, ebenfalls umfassend ein flächenförmiges Förderorgan, und eine Steuerungseinrichtung zum ausrichtungstreuen Abgeben von liegend geförderten Fördergütern von der Zufördereinrichtung an die Übergabefördereinrichtung.

Durch den zunehmenden Online-Handel werden in Umschlagzentren immer grössere Mengen von Fördergütern, wie z.B. von Paketen, unterschiedlicher Grösse verarbeitet.

Die grossen Mengen an Fördergütern von unterschiedlicher Grösse sind eine Herausforderung für die Umschlagzentren. So sollen die Fördergüter in den Umschlagzentren möglichst speditiv und fehlerfrei verarbeitet werden, damit diese ihren Empfänger schnellstmöglich und korrekt erreichen. Ferner soll die Verarbeitung der Fördergüter zuverlässig und möglichst störungsfrei verlaufen damit es zu keinen Verarbeitungsausfallzeiten kommt.

In den Umschlagzentren werden die eintreffenden Fördergüter in Sortier- und Verteilsysteme eingespiesen. Die Fördergüter werden in der Regel als Liegeware auf der Förderfläche einer Übergabefördereinrichtung den Fördereinheiten eines Sortierförderer, auch Sorter genannt, seitlich zugefördert und diesem übergeben.

Die Übergabefördereinrichtung wird wiederum durch eine Zufördereinrichtung mit Fördergütern gespiesen. Die Zufördereinrichtung fördert die Fördergüter ebenfalls als Liegeware auf einer Förderfläche der Übergabefördereinrichtung seitlich zu. Die Fördergüter fallen bei der Übergabe von der Förderfläche der Zufördereinrichtung auf die tiefer liegende Förderfläche der Übergabefördereinrichtung.

Eine gattungsgemässe Förderanlage mit einem Sortierförderer und einer dazugehörigen Übergabefördereinrichtung und Zufördereinrichtung ist zum Beispiel in der DE 103 46 122 A1 offenbart.

Der Sortierförderer kann beispielsweise als so genannter Kippschalenförderer ausgebildet sein, welcher zum Abgeben von Fördergütern kippbare Förderschalen aufweist. Mittels des Kippschalenförderers werden die Fördergüter in Kippschalen entlang einer Abgabezone an Abgabestellen vorbei gefördert. Sobald das Fördergut die vorbestimmte Abgabestelle erreicht hat, wird die Kippschale über einen Kippmechanismus in eine Schrägstellung versetzt und die Fördergüter gleiten an der betreffenden Abgabestelle seitlich von der Förderschale ab.

Alternativ können die Kippschalen bereits vor der Abgabezone gekippt werden, wobei die Abgabe des Fördergutes an der vorbestimmten Abgabestelle durch Schwenken einer abgabeseitigen, tieferliegenden Seitenwand von einer Schliessstellung in eine Offenstellung erfolgt, z. B. mittels Hoch- oder Herunterklappen der Seitenwand.

Die Fördereinheiten, insbesondere die Kippschalen des Sortierförderers, weisen in der Regel eine Längserstreckung parallel zur Förderrichtung der Fördereinheiten auf (Fördereinheitlänge), welche grösser ist als die Längserstreckung der Fördereinheiten quer zur Förderrichtung (Fördereinheitbreite).

Dies ist bei Doppelförderschalen zur Aufnahme von langen Fördergütern besonders ausgeprägt. Die Doppelförderschale wird aus zwei in Förderrichtung hintereinander angeordneten Teilschalen ausgebildet, welche durch einen im Vergleich zu den Seitenwänden niedrigen Mittelsteg voneinander getrennt und zur Aufnahme jeweils eines Fördergutes ausgelegt sind. Die Doppelförderschale erlaubt jedoch auch die Aufnahme von grösseren, d.h. längeren Fördergütern, welche sich dann über beide Teilschalen und folglich über den diese voneinander trennenden herabgesetzten Mittelsteg erstrecken.

Die Fördergüter müssen für eine taktsynchrone und passgenaue Übergabe von der Übergabefördereinrichtung in die Fördereinheiten des Sortierförderers auf der Förderfläche der Übergabefördereinrichtung präzise ausgerichtet sein. Dies trifft insbesondere auf Fördergüter zu, welche noch knapp auf den Fördereinheiten Platz haben. So müssen beispielsweise die Längsseiten der z. B. als quaderförmige Pakete vorliegenden Fördergüter parallel zur Längsseite der Fördereinheiten ausgerichtet sein.

Sind die Fördergüter nicht auf die Fördereinheiten des Sortierförderers im Transferbereich ausgerichtet, z. B. aufgrund einer unkontrollierten Verschiebung bzw. Drehung der Fördergüter bei der Übergabe von der Zufördereinrichtung an die Übergabefördereinrichtung, so hat das Fördergut unter Umständen keinen Platz auf der Fördereinheit oder es verkantet während des Transfers in der Fördereinheit.

In der Regel werden bzw. sind die Fördergüter bereits auf der Förderfläche der Zufördereinrichtung auf die Fördereinheiten des Sortierförderers ausgerichtet. Die bereits ausgerichteten Fördergüter werden der Übergabefördereinrichtung zugefördert und dieser idealerweise unter Beibehaltung der Ausrichtung übergeben. Entsprechend soll die bestehende Ausrichtung bzw. Orientierung der Förderguter bei der Übergabe an die Übergabefördereinrichtung nicht verändert werden.

Entsprechend müssen im Übergabebereich Massnahmen ergriffen werden, welche die Beibehaltung der Ausrichtung bzw. Orientierung der Fördergüter bei der Übergabe von der Zufördereinrichtung an die Übergabefördereinrichtung gewährleisten.

Die DE 103 46 122 A1 offenbart nun hierzu eine keilförmig ausgestaltete Stützplatte, welche unterhalb eines letzten Bandförderers der Zufördereinrichtung angeordnet und in Förderrichtung der Zufördereinrichtung über die Förderfläche der Übergabefördereinrichtung ausgefahren werden kann. Das Fördergut wird nun vom letzten Bandförderer der Zufördereinrichtung auf die ausfahrende bzw. auf die über die Förderfläche der Übergabefördereinrichtung in eine Übergabeposition ausgefahrene Stützplatte gefördert und durch die Stützplatte von unten gestützt. Durch ruckartiges Zurückziehen der Stützplatte fällt das Fördergut von oben auf das darunterliegende Förderorgan der Übergabefördereinrichtung und wird von diesem in Förderrichtung der Übergabefördereinrichtung mitgenommen.

Die Stützplatte stützt hierzu das auf dieser liegenden Fördergut derart von unten, dass das sich darunter vorbeibewegende Förderorgan der Übergabefördereinrichtung keinen Kontakt zur Stützplatte ausbildet. Dies bedingt jedoch eine entsprechend steife Ausführung der Stützplatte, was mit einer entsprechenden Dicke der Stützplatte einher geht. Überdies müssen auch die entstehenden Biegekräfte der Stützplatte abgestützt werden, welche durch die vorrückende, ausladende Stützplatte entstehen. Diese Biegekräfte werden über den letzten Einzelförderer abgestützt.

Ein weiterer Nachteil dieser Konstruktion liegt ferner darin, dass die Fördergüter bedingt durch die vergleichsweise grosse Dicke des Plattenelements sowie den Abstand zwischen dem Plattenelement und der Förderfläche der Übergabefördereinrichtung eine vergleichsweise grosse Fallhöhe aufweist. Eine grosse Fallhöhe kann jedoch wiederum zu aerodynamischen Effekten führen, welche eine Änderung der Lage bzw. Ausrichtung der Fördergüter während ihres Falles auf die Förderfläche der Übergabefördereinrichtung bewirken können.

Es ist nun eine Aufgabe der vorliegenden Erfindung, eine Förderanordnung mit einer Zufördereinrichtung und einer Übergabefördereinrichtung vorzuschlagen, welche unter Einsatz von möglichst einfachen und kostengünstigen technischen Mitteln eine ausrichtungstreue Übergabe der Fördergüter von der Zufördereinrichtung an die Übergabefördereinrichtung erlauben.

Ferner ist es auch eine Aufgabe der vorliegenden Erfindung, alternative technische Mittel zur ausrichtungstreuen Übergabe der Fördergüter von der Zufördereinrichtung an die Übergabefördereinrichtung vorzuschlagen.

Ferner ist es auch eine Aufgabe der vorliegenden Erfindung, eine Förderanlage vorzuschlagen, welche eine möglichst schonende Übergabe der Fördergütern von der Zufördereinrichtung an die Übergabefördereinrichtung erlaubt.

Ferner ist es auch eine Aufgabe der vorliegenden Erfindung, eine Sortieranlage vorzuschlagen, welche eine möglichst präzise und gerichtete Übergabe der Fördergüter an die Fördereinheiten, insbesondere Förderschalen, eines Sortierförderers erlaubt.

Wenigstens eine Aufgabe wird mit den Merkmalen der unabhängigen Ansprüche 1 und 6 sowie 16 gelöst. Die abhängigen Ansprüche sowie die Beschreibung und die Figuren beinhalten besondere Ausführungsformen und Weiterbildungen der Erfindung.

Gemässe einer ersten Ausführungsvariante enthält die erfindungsgemässe Förderanordnung:
- eine Zufördereinrichtung mit mindestens einem flächenförmigen Förderorgan,
- eine Übergabefördereinrichtung mit mindestens einem flächenförmigen Förderorgan, sowie
- eine Steuerungseinrichtung,
zum ausrichtungstreuen Abgeben von liegend geförderten Fördergütern von der Zufördereinrichtung an die Übergabefördereinrichtung, wobei die Zufördereinrichtung eine Positioniervorrichtung mit einem in Förderrichtung der Zufördereinrichtung über das Förderorgan der Übergabefördereinrichtung in eine Übergabeposition ausfahrbares bzw. vorrückbares, flächenförmiges Positionierelement zum Positionieren des abzugebenden Förderguts über dem Förderorgan der Übergabefördereinrichtung aufweist, Die Erfindung zeichnet sich dadurch aus, dass die Positioniervorrichtung so ausgelegt, ist, dass das flächige Positionierelement in der Übergabeposition unter der Last eines diesem aufliegenden Fördergutes dem Förderorgan der Übergabefördereinrichtung aufliegt und durch das Förderorgan von unten gestützt wird.

Das Positionierelement ist hierzu insbesondere biegeweich bzw. flexibel oder biegsam ausgebildet. Entsprechend kann das Positionierelement auch nicht selbsttragend ausgebildet sein.

Das Positionierelement weist jedoch insbesondere eine Eigenstabilität auf, derart dass sich dieses ohne Verformen, wie Stauchen, über das Förderorgan der Übergabefördereinrichtung vorrücken lässt.

Unter "Vorrücken" ist die Bewegung des Positionierelementes aus einer Ausgangsposition in eine Übergabeposition zu verstehen, bei welcher dieses in Förderrichtung der Zufördereinrichtung über das Förderorgan der Übergabefördereinrichtung bewegt wird.

Das Positionierelement ist vorzugsweise vergleichsweise dünn ausgebildet und weist insbesondere eine Dicke von 0.5 bis 5 mm, ganz besonderes von 1 bis 2 mm auf. Das Positionierelement weist insbesondere eine gleichbleibende Dicke auf.

Das Positionierelement ist insbesondere rechteckförmig ausgebildet.

Das Positionierelement ist insbesondere aus Kunststoff mit einem niedrigen Reibungskoeffizienten, wie z. B. POM (Polyoxymethylene) oder PTFE (Polytetrafluorethylen, Teflon).

Das Positionierelement liegt in der Übergabeposition folglich dem darunter liegenden Förderorgan der Übergabefördereinrichtung auf und wird von diesem gestützt.

Bis anhin herrschte die Meinung vor, dass das Positionierelement keinen Kontakt zum darunter liegenden Förderorgan der Übergabefördereinrichtung ausbilden darf, da sonst die daraus resultierenden Reibkräfte zu erhöhtem Verschleiss und Betriebsstörungen führen würden. Es wurde nun jedoch überraschend herausgefunden, dass die Abstützung des Positionierelementes auf dem Förderorgan der Übergabefördereinrichtung zu keinem erhöhten Verschleiss oder anderweitigen Problemen, wie Störungen, führt. Dies rührt unter anderem daher, dass vom Förderorgan der Übergabefördereinrichtung ausgehende Vibrationen auf das Positionierelement übertragen werden, so dass der auf das Förderorgan wirkende Auflagedruck des Positionierelements und somit die Reibung zwischen Positionierelement und Förderorgan durch die Vibrationen vermindert wird.

Da die Verweilzeit des Fördergutes auf dem Positionierelement zwecks Übergabe an die Übergabefördereinrichtung äusserst kurz ist, haben die Vibrationen auch keinen negativen Einfluss auf die Ausrichtung des Fördergutes während der Übergabe.

Das Positionierelement ist über einen Antrieb zwischen einer Ausgangsposition, in welcher das Positionierelement unterhalb der Förderfläche der Zufördereinrichtung zurückgezogen ist und der Übergabeposition reversierbar bewegbar.

Der Antrieb kann einen Antriebsriemen, insbesondere einen Antriebszahnriemen, umfassen, welcher mit dem Positionierelement verbunden ist. Der Antriebsriemen ist insbesondere über Umlenkrollen endlos umlaufend geführt. Hierbei ist der Antriebsriemen insbesondere mit einem Riemenabschnitt über eine Klemmverbindung mit dem Positionierelement verbunden.

Der Antriebsriemen ist insbesondere um eine Antriebswelle geführt, die von einem Motor angetrieben wird. Die Antriebswelle übt eine Mitnahmekraft auf den diese wenigstens teilweise umschlingende Antriebsriemen aus. In Abhängigkeit von der Drehrichtung der Antriebswelle wird das Positionierelement beim Drehen der Antriebswelle in die Übergabeposition ausgefahren oder in die Ausgangsposition zurückgezogen.

Das Positionierelement ist in der Ausgangsposition insbesondere in seitlichen Führungen geführt. Zur Einnahme der Übergabeposition ist das Positionierelement aus den seitlichen Führungen über das Förderorgan der Übergabefördereinrichtung heraus bewegbar. Die seitlichen Führungen können Gleitleisten mit Führungsnuten sein, in welchen jeweils ein seitlicher Randabschnitts des Positionierelements gleitend geführt ist.

Die Übergabefördereinrichtung ist insbesondere dazu ausgelegt, Fördergüter in die Fördereinheiten eines Sortierförderers bzw. Sorters zu transferieren.

Die Förderanordnung umfasst insbesondere einen Sortierförderer mit einer Mehrzahl von entlang einer Förderbahn bewegbaren Fördereinheiten, wobei die Übergabefördereinrichtung zum Transferieren der Fördergüter von der Übergabefördereinrichtung an Fördereinheiten des Sortierförderers ausgelegt ist.

Die Förderanordnung mit Zufördereinrichtung, Übergabefördereinrichtung und Sortierförderer entspricht folglich insbesondere einer Sortieranlage. Der Sortierförderer ist dazu ausgelegt, Fördergüter an entlang der Förderbahn des Sortierförderers angeordneten Abgabestationen abzugeben.

Der Sortierförderer enthält eine Mehrzahl von entlang einer Förderbahn bewegbaren, diskreten Fördereinheiten. Der Sortierförderer ist insbesondere ein Förderrundlauf.

Die Übergabefördereinrichtung ist insbesondere zum Transferieren der Fördergüter von der Übergabefördereinrichtung an Fördereinheiten des Sortierförderers ausgelegt. Die Fördereinheiten sind insbesondere entlang ihrer Förderbahn gleichmässig voneinander beabstandet. Die Fördereinheiten werden insbesondere mit gleicher Geschwindigkeit entlang ihrer Förderbahn bewegt. Die Fördereinheiten sind insbesondere miteinander mechanisch gekoppelt, z. B. miteinander verkettet.

Der Sortierförderer ist insbesondere ein Schalenförderer, und ganz besonders ein Kippschalenförderer. Die Fördereinheiten sind entsprechend Förderschalen, insbesondere Kippschalen.

Der Schalenförderer zeichnet sich durch eine Vielzahl von hintereinander entlang der Förderbahn angeordnete und insbesondere miteinander verketteten Förderschalen aus. Die Förderschalen bilden jeweils ein Aufnahmefach mit einer Förderfläche für das Fördergut aus. Die Förderschalen bilden insbesondere gleichbleibende Abstände zueinander aus. Die Förderschalen können so genannte Doppelförderschalen sein, wie eingangs beschrieben.

Bei einem Kippschalenförderer sind die Förderschalen zwecks Abgabe von Fördergütern über einen Kippmechanismus in Förderrichtung betrachtet seitlich kippbar. Ein solcher Kippschalenförderer ist z. B. in der US 5,632,589 A beschrieben.

Die Förderschalen können schwenkbare Seitenwände haben, welche zur Abgabe der Fördergüter von einer Schliessstellung, welche das Fördergut seitlich zurückhalten, in eine Offenstellung, in welcher das Fördergut von der Förderschale abrutschen kann, geschwenkt werden können. So können die Seitenwände beispielsweise herunterklappbar sein, so dass das Fördergut über die heruntergeklappte Seitenwand in Förderrichtung betrachtet seitlich von der Förderschale abrutschen kann. Die Veröffentlichungsschrift CH 710 851 A1 beschreibt einen solchen Kippschalenförderer.

Der Sortierförderer kann allerdings auch ein Quergurtförderer oder ein Schuhförderer oder ein anderweitiger Förderer mit diskreten Fördereinheiten sein.

Die zum liegenden Fördern der Fördergüter ausgelegte Zufördereinrichtung zeichnet sich durch ein Förderorgan aus, welches im Übergabebereich an einem Förderende aus einem Förderabschnitt in einen Rückfiihrabschnitt umgelenkt wird. Ein von der Zufördereinrichtung in den Übergabebereich gefördertes Fördergut verlässt entsprechend das Förderorgan am Förderende.

Der Übergabebereich entspricht jenem Bereich der Förderanordnung, in welchem die Fördergüter von der Zufördereinrichtung an die Übergabefördereinrichtung übergeben werden. Das Fördergut erfährt bei der Übergabe von der Zufördereinrichtung an die Übergabefördereinrichtung eine Richtungsänderung.

Die Zufördereinrichtung kann ein einzelner Förderer sein. Die Zufördereinrichtung kann auch eine Mehrzahl von in Förderrichtung hintereinander angeordnete Förderer enthalten. Die Zufördereinrichtung bzw. dessen Förderorgan oder Förderorgane bildet eine Förderfläche, insbesondere eine ebene Förderfläche für die Fördergüter aus. Die Förderfläche ist insbesondere horizontal.

Die Zufördereinrichtung kann ein Bandförderer mit einem angetriebenen Förderband sein oder einen solchen enthalten.

Die Zufördereinrichtung kann ein Modulbandförderer mit einem angetriebenen Modulband sein oder einen solchen enthalten.

Die Zufördereinrichtung kann ein Plattenkettenförderer mit einer angetriebenen Plattenkette sein oder einen solchen enthalten.

Die Zufördereinrichtung kann ein Mattenkettenförderer mit einer angetriebenen Mattenkette sein oder einen solchen enthalten.

Die Zufördereinrichtung kann eine Rollenbahn mit angetriebenen Rollen sein oder eine solche enthalten.

Die Zufördereinrichtung kann ein Gurt- oder Riemenförderer sein oder einen solchen enthalten. Der Gurt- bzw. Riemenförderer umfasst mehreren parallel zueinander und insbesondere voneinander beabstandet angeordnete, angetriebene Fördergurten bzw. Förderriemen. Die Fördergurten bzw. Förderriemen sind gleichgerichtet antreibbar.

Enthält die Zufördereinrichtung mehrere in Förderrichtung hintereinander angeordnete Förderer, so bewegen sich deren Förderorgane insbesondere gleichgerichtet, d.h. in dieselbe Förderrichtung. Die Förderer können dabei typengleich sein. Die Förderer können auch typenverschieden sein. So kann die Zufördereinrichtung zwei oder mehr als zwei Förderer eines oben genannten Typs umfassen.

Die Zufördereinrichtung ist insbesondere so ausgelegt und angeordnet, dass die Fördergüter seitlich, d.h. von der Seite der Übergabefördereinrichtung zugefördert werden. Die Zufördereinrichtung kann so ausgelegt sein, dass die Fördergüter in einem spitzen Zuförderwinkel von kleiner 90° (Winkelgrad), insbesondere von kleiner 70° von der Seite der Übergabefördereinrichtung zugefördert werden. Die Fördergüter können allerdings auch im rechten Winkel, d.h. in einem Winkel von 90° seitlich der Übergabefördereinrichtung zugefördert werden.

Der besagte spitze Zuförderwinkel wird insbesondere zwischen der Förderrichtung der Zufördereinrichtung und dem Förderwinkel der Übergabefördereinrichtung eingeschlossen.

Die Förderrichtung bzw. Förderbahn der Zufördereinrichtung kann insbesondere parallel, und ganz besonders gleichgerichtet zur Förderrichtung des Sortierförderers im Transferbereich verlaufen. Die Förderbahn der Zufördereinrichtung verläuft insbesondere geradlinig.

Der Transferbereich entspricht jenem Bereich der Förderanordnung bzw. der Sortieranlage, in welchem die Fördergüter von der Übergabefördereinrichtung an die Fördereinheiten des Sortierförderers transferiert werden. Anstelle von Transfer kann auch von Einschleusen bzw. von Einschleusbereich gesprochen werden.

Die zum liegenden Fördern der Fördergüter ausgelegte Übergabefördereinrichtung kann ein einzelner Förderer sein. Die Übergabefördereinrichtung kann auch eine Mehrzahl von in Förderrichtung hintereinander angeordnete Förderer enthalten. Die Übergabefördereinrichtung bzw. dessen Förderorgan oder Förderorgane bildet eine Förderfläche insbesondere eine ebene Förderfläche für die Fördergüter aus. Die Förderfläche ist insbesondere horizontal.

Die Förderbahn der Übergabefördereinrichtung verläuft insbesondere geradlinig.

Die Förderfläche der Übergabefördereinrichtung liegt im Übergabebereich insbesondere tiefer als die Förderfläche der Zufördereinrichtung, so dass die Fördergüter von oben auf die Förderfläche der Übergabefördereinrichtung abgegeben werden können.

Die Übergabefördereinrichtung kann ein Bandförderer mit einem angetriebenen Förderband sein oder einen solchen enthalten.

Die Übergabefördereinrichtung kann ein Modulbandförderer mit einem angetriebenen Modulband sein oder einen solchen enthalten.

Die Übergabefördereinrichtung kann ein Plattenkettenförderer mit einer angetriebenen Plattenkette sein oder einen solchen enthalten.

Die Übergabefördereinrichtung kann ein Mattenkettenförderer mit einer angetriebenen Mattenkette sein oder einen solchen enthalten.

Die Übergabefördereinrichtung kann eine Rollenbahn mit angetriebenen Rollen sein oder eine solche enthalten.

Die Übergabefördereinrichtung kann ein Gurt- oder Riemenförderer sein oder einen solchen enthalten. Der Gurt- bzw. Riemenförderer umfasst mehreren parallel zueinander und insbesondere voneinander beabstandet angeordnete, angetriebene Fördergurten bzw. Förderriemen. Die Fördergurten bzw. Förderriemen sind gleichgerichtet antreibbar.

Enthält die Übergabefördereinrichtung mehrere in Förderrichtung hintereinander angeordneten Förderer, so bewegen sich deren Förderorgane insbesondere gleichgerichtet, d.h. in dieselbe Förderrichtung.

Die Förderer können typengleich sein. Die Förderer können auch typenverschieden sein. So kann die Übergabefördereinrichtung zwei oder mehr als zwei Förderer eines oben genannten Typs umfassen.

Die Übergabefördereinrichtung kann so ausgelegt und angeordnet sein, dass die Fördergüter seitlich, d.h. von der Seite in die Fördereinheiten des Sortierförderer transferiert werden.

Die Übergabefördereinrichtung kann so ausgelegt sein, dass die Fördergüter in einem spitzen Transferförderwinkel von kleiner 90° (Winkelgrad), insbesondere von kleiner 70° von der Seite dem Sortierförderer bzw. dessen Fördereinheiten zugefördert werden. Die Fördergüter können allerdings auch im rechten Winkel, d.h. in einem Winkel von 90° seitlich dem Sortierförderer bzw. dessen Fördereinheiten zugefördert werden.

Der besagte spitze Transferförderwinkel wird insbesondere zwischen der Förderrichtung der Übergabefördereinrichtung und dem Förderwinkel des Sortierförderers eingeschlossen.

Erfolgt die Zufuhr der Fördergüter seitlich in einem spitzen Winkel von weniger als 90°, so umfasst die Übergabefördereinrichtung insbesondere einen an den Sortierförderer angrenzenden Gurtförderer bzw. Riemenförderer mit einer Mehrzahl von parallel nebeneinander angeordneten Fördergurten bzw. -riemen, wie oben erwähnt.

Die Übergabefördereinrichtung ist insbesondere Teil einer Einschleuskonfiguration, welche zusammen mit dem Sortierförderer einen Transferbereich bzw. Einschleusbereich zum Transferieren bzw. Einschleusen der Fördergüter auf die Fördereinheiten des Sortierförderer ausbildet.

Gemäss einer zweiten Ausführungsvariante enthält die Förderanordnung:
- eine Zufördereinrichtung mit mindestens einem Endlosbandförderer,
- eine Übergabefördereinrichtung mit mindestens einem flächenförmigen Förderorgan, sowie
- eine Steuerungseinrichtung,
zum ausrichtungstreuen Abgeben von liegend geförderten Fördergütern von der Zufördereinrichtung an die Übergabefördereinrichtung, wobei der Endlosbandförderer einen Förderendabschnitt ausbildet, in welchem das Förderband über ein am Förderende angeordnetes Umlenkorgan, wie Umlenkrolle, aus einen Förderbereich in einen Rückführbereich umgelenkt wird,

Die Erfindung gemäss der zweiten Ausführungsvariante zeichnet sich dadurch aus, dass der Förderendabschnitt mittels einer Verstellvorrichtung zum Positionieren des zu übergebenden Förderguts über dem Förderorgan der Übergabefördereinrichtung in Förderrichtung der Zufördereinrichtung in eine über dem Förderorgan der Übergabefördereinrichtung angeordnete Übergabeposition vorrückbar ist.

Die Beschreibung zur Zuförder- und Übergabefördereinrichtung weiter oben, sofern diese nicht den verschiebbaren Förderendabschnitt betrifft, trifft auch auf die zweite Ausführungsvariante zu.

Der Förderendabschnitt ist insbesondere mittels der Verstellvorrichtung, z. B. parallel zur Förderrichtung der Zufördereinrichtung, zwischen einer Ausgangsposition, in welcher der Förderendabschnitt zurückgezogen ist, und der Übergabeposition reversierbar bewegbar.

So ist insbesondere das Umlenkorgan am Förderende mittels der Verstellvorrichtung entlang der Förderrichtung der Zufördereinrichtung reversierbar bewegbar.

Die Verstellvorrichtung ist des Weiteren insbesondere zur Ausbildung einer Förderbandreserve ausgelegt, welche die Bereitstellung einer Förderbandlänge beim Vorrücken des Förderendabschnitts bzw. der Umlenkrolle am Förderende ermöglicht. Die Förderbahnreserve wird insbesondere durch einen Schlaufenspeicher gebildet, bei welchem das Förderband unter Ausbildung einer Speicherschlaufe um mindestens eine Umlenkrolle geführt ist. Die mindestens eine Umlenkrolle ist zur Ausbildung bzw. Freigabe einer Förderbandreserve bezüglich ihrer Drehachse insbesondere beweglich bzw. verschiebbar gelagert.

Gemäss einer besonderen Weiterbildung der zweiten Ausführungsvariante enthält die Förderanordnung eine dem Förderendabschnitt der Zufördereinrichtung gegenüber liegend und auf der anderen Seite der Übergabefördereinrichtung angeordnete Übergabehilfseinrichtung mit einem, ein endlos umlaufendes Stützband umfassenden Stützbandförderer. Der Stützbandförderer bildet einen zum Förderendabschnitt hin gerichteten Stützabschnitt mit einem Stützende aus, an welchem das Stützband über ein Umlenkorgan, wie Umlenkrolle, aus einem Stützbereich in einen Rückführbereich umgelenkt wird.

Der Stützabschnitt ist nun zur Positionierung des zu übergebenden Förderguts über dem Förderorgan der Übergabefördereinrichtung mittels einer Verstellvorrichtung entgegen der Förderrichtung der Zufördereinrichtung, d.h. zum Förderendabschnitt der Zufördereinrichtung hin in eine über dem Förderorgan der Übergabefördereinrichtung angeordnete Übergabeposition vorrückbar. Der Förderendabschnitt und der Stützabschnitt bilden in der Übergabeposition eine gemeinsame Auflage für das zu übergebende Fördergut aus.

Die Verstellvorrichtung ist insbesondere analog zur Verstellvorrichtung für den Förderendabschnitt ausgebildet und ist insbesondere zum Verschieben des endseitigen Umlenkorgans, wie Umlenkrolle, parallel zur Förderrichtung der Zuführeinrichtung ausgelegt.

Die Verstellvorrichtung kann ferner analog zum Förderendabschnitt zur Ausbildung einer Stützbandreserve ausgelegt sein, welche die Bereitstellung einer Stützbandbandlänge beim Vorrücken des Stützabschnitts ermöglicht. Die Stützbandreserve wird insbesondere durch einen Schlaufenspeicher gebildet, bei welchem das Stützband unter Ausbildung einer Speicherschlaufe um mindestens eine Umlenkrolle geführt ist. Die mindestens eine Umlenkrolle ist zur Ausbildung bzw. Freigabe einer Stützbandreserve bezüglich ihrer Drehachse insbesondere beweglich bzw. verschiebbar gelagert.

Die Übergabehilfseinrichtung kann in einer Weiterbildung auch zum Ausschleusen von insbesondere fehlplatzierten Fördergütern eingesetzt werden.

So kann beispielsweise ein auszuschleusendes Fördergut vom Bandförderer der Zufördereinrichtung bzw. von dessen Förderendabschnitt vollständig an den Stützbandförderer der Übergabehilfseinrichtung bzw. an dessen Stützabschnitt übergeben werden. Das auszuschleusende Fördergut lässt sich dann mit einer Förderbewegung des Stützbandförderers in Förderrichtung der Zufördereinrichtung aus dem Übergabebereich ausschleusen.

Das Fördergut kann von der Übergabehilfseinrichtung bzw. von dessen Stützbandförderer an einen Sammelbehälter bzw. an einen Ausschleusförderer übergeben werden.

Gemäss einer Weiterbildung der Erfindung enthält die Förderanordnung eine der Zufördereinrichtung zugeordneten, insbesondere erste Sensoreinrichtung zum Detektieren von wenigstens einer der folgenden Eigenschaften der Fördergüter während ihrer liegenden Förderung mit der Zufördereinrichtung:
- die Längsausdehnung des Fördergutes parallel zur Förderrichtung der Zufördereinrichtung bzw. parallel zur Förderrichtung des Sortierförderers;
- die Längsausdehnung des Fördergutes quer zur Förderrichtung der Zufördereinrichtung bzw. quer zur Förderrichtung des Sortierförderers;
- die Lage des Fördergutes auf dem Förderorgan der Zufördereinrichtung;
- die Ausrichtung bzw. Orientierung des Fördergutes auf dem Förderorgan der Zufördereinrichtung.

Die Längsausdehnung des Fördergutes parallel zur Förderrichtung der Zufördereinrichtung bzw. parallel zur Förderrichtung des Sortierförderers entspricht insbesondere der Länge des Förderguts. Die Längsausdehnung des Fördergutes quer zur Förderrichtung der Zufördereinrichtung bzw. quer zur Förderrichtung des Sortierförderers entspricht insbesondere der Breite des Förderguts.

Die Lage des Fördergutes betrifft insbesondere die Position bzw. Anordnung des Fördergutes auf dem Förderorgan quer zur Förderrichtung. Die Lage des Fördergutes betrifft insbesondere die Position bzw. Anordnung des Fördergutes auf dem Förderorgan parallel zur Förderrichtung.

Gemäss einer Weiterbildung der Erfindung enthält die Förderanordnung eine der Übergabefördereinrichtung zugeordnete, insbesondere zweite Sensoreinrichtung zum Detektieren von wenigstens einer der folgenden Eigenschaften der Fördergüter während ihrer liegenden Förderung mit der Übergabefördereinrichtung:
- die Längsausdehnung des Fördergutes parallel zur Förderrichtung des Sortierförderers im Transferbereich;
- die Längsausdehnung des Fördergutes quer zur Förderrichtung des Sortierförderers;
- die Lage des Fördergutes auf dem Förderorgan der Übergabefördereinrichtung;
- die Ausrichtung bzw. Orientierung des Fördergutes auf dem Förderorgan der Übergabefördereinrichtung.

Die oben genannten Sensoreinrichtungen dienen insbesondere dazu, fehlplatzierte Fördergüter zu detektieren und diese stromabwärts vor dem Transfer zum Sortierförderer auszuschleusen. Fehlplatzierte Fördergüter sind beispielsweis nicht korrekt ausgerichtete Fördergüter, welche in der Folge beim Transfer auf die Fördereinheit zu verkanten drohen oder wegen ihrer falschen Ausrichtung keinen Platz auf der Fördereinheit haben.

Die der Übergabefördereinrichtung zugeordnete Sensoreinrichtung kann auch dazu diesen, die Lage der Fördergüter auf dem Förderorgan der Übergabefördereinrichtung für einen taktsynchronen und punktgenauen Transfer auf die Fördereinheiten des Sortierförderers zu erfassen.

Eine der beiden oben genannten Sensoreinrichtungen, insbesondere die zweite Sensoreinrichtung kann, insbesondere zusammen mit einer Auswerteeinrichtung, auch dazu ausgelegt sein, die Grösse des Fördergutes zu ermitteln. Die Auswerteeinrichtung bzw. die Steuerungseinrichtung kann entsprechend dazu ausgelegt sein, in Abhängigkeit von der ermittelten Grösse des Förderguts eine Zuordnung des Förderguts auf eine Teilschale einer Doppelschale oder auf beide Teilschalen einer Doppelschale vorzunehmen. Die Steuerungseinrichtung steuert die Übergabefördereinrichtung entsprechend derart, dass das betreffende Fördergut taktsynchron mit einer Teilschale einer Doppelförderschale oder taktsynchron mit beiden Teilschalen einer Doppelförderschale zusammentrifft.

Die Sensoreinrichtung enthält insbesondere eine optoelektronische Sensoreinheit. Die optoelektronische Sensoreinheit kann z. B. eine Lichtschranke oder eine Kamera sein.

Die Förderanlage enthält in diesem Kontext insbesondere auch eine Auswerteeinrichtung, welche die Signale der Sensoreinrichtung mittels einer Auswertesoftware auswertet und daraus Steuerbefehle zur Steuerung eines Ausschleusvorganges erzeugt und/oder Steuerbefehle zur Steuerung der Fördergeschwindigkeit eines oder mehrerer Förderer der Übergabefördereinrichtung zwecks taktsynchronem und punktgenauem Transfer.

Entsprechend ist die Sensoreinrichtung mit der Steuerungseinrichtung verbunden.

Die Auswerteeinrichtung ist nicht zwingend als separate, abgeschlossene physische Einheit zu betrachten. So kann die Auswerteeinrichtung Teil der Steuerungseinrichtung sein. Die Auswerteeinrichtung kann auch Teil der Sensoreinrichtung sein.

Ferner ist es auch möglich, dass gewisse Funktionen der Auswerteeinrichtung, wie die Auswertung der Sensordaten, in der Sensoreinrichtung und andere Funktionen, wie die Generierung von Steuerbefehlen aus den Auswertedaten, in der Steuerungseinrichtung umgesetzt sind.

Die Auswerteeinrichtung umfasst insbesondere eine Auswertesoftware zur Identifizierung von fehlplatzierten Fördergütern auf Basis der ermittelten bzw. detektierten mindestens einen Eigenschaft der Fördergüter.

Bei Feststellen eines fehlplatzierten Fördergutes durch die Auswerteeinrichtung wird die Ausschleusung des besagten Fördergutes durch die Steuerungseinrichtung veranlasst.

Zum Ausschleusen von fehlplatzierten Fördergütern kann vorgesehen sein, dass die Übergabefördereinrichtung einen Bandförderer enthält, welcher in Förderrichtung der Übergabefördereinrichtung betrachtet ein um ein vorderes Umlenkorgan, insbesondere Umlenkrolle, und um ein hinteres Umlenkorgan, insbesondere Umlenkrolle, endlos geführtes Förderband aufweist. Der Bandförderer ist nun um eine Schwenkachse nach unten in eine Ausschleussstellung schwenkbar, so dass fehlplatzierte Fördergüter mittels des Bandförderers nach unten ausgeschleust werden können. Alternativ kann der Bandförderer auch nach oben in die Ausschleusstellung schwenkbar sein.

Der Bandförderer ist insbesondere um das in Förderrichtung vordere Umlenkorgan nach unten bzw. nach oben schwenkbar, so dass sich am Förderende eines in Förderrichtung vorgeordneten Förderers, wie Bandförderer, eine nach unten offene Förderlücke öffnet. Ein auf dem vorgeordneten Förderer liegend gefördertes Fördergut, welches ausgeschleust werden soll, fällt am Förderende des vorgeordneten Förderers durch die Förderlücke nach unten.

Im Anschluss an die Auschleusung des Förderguts wird der Bandförderer zwecks Förderung der Fördergüter um die Schwenkachse wieder in die Förderstellung zurückgeschwenkt.

Das ausgeschleuste Fördergut kann nach unten in einen Sammelbehälter fallen. Das ausgeschleuste Fördergut kann auch nach unten auf die Förderfläche eines Ausschleusförderers fallen.

Gemäss einem alternativen Ausschleusverfahren enthält die Übergabefördereinrichtung einen durch den Übergabebereich führenden Bandförderer, dessen Förderband sowohl in Förderrichtung als auch in die entgegengesetzte Richtung betreibbar ist. Zum Ausschleusen eines Fördergutes wird das Förderband des Bandförderers nach der Übergabe des Fördergutes in die der Förderrichtung entgegengesetzte Richtung angetrieben so, dass das Fördergut nach hinten, d.h. stromaufwärts, entgegen der Förderrichtung bewegt und ausgeschleust wird. Die nach hinten ausgeschleusten Fördergüter können nach unten in einen Sammelbehälter fallen. Die ausgeschleusten Fördergüter können auch nach unten auf die Förderfläche eines Ausschleusförderers fallen.

Die liegend geförderten Fördergüter sind insbesondere Liegewaren. Die Fördergüter sind insbesondere Stückgüter bzw. Einzelgüter. Die Fördergüter sind insbesondere von quaderförmiger bzw. in Draufsicht rechteckiger Form. Die Fördergüter sind insbesondere verpackte Waren. Die Fördergüter können zum Beispiel Pakete, Schachteln, Kisten, Boxen, Gebinde, Päckchen, Transportaschen, Gepäckstücke, wie Koffer, oder Beutelwaren sein.

Die Erfindung betrifft auch ein Verfahren zum Abgeben von Fördergütern von einer Zufördereinrichtung an eine Übergabefördereinrichtung mittels einer Förderanordnung wie oben beschrieben.

Das Verfahren zeichnet sich dadurch aus, dass zum Abgeben eines Fördergutes an die Übergabefördereinrichtung das Positionierelement bzw. der Förderendabschnitt in Zuförderrichtung aus der Ausgangsposition über das Förderorgan der Übergabefördereinrichtung in die Übergabeposition vorgerückt wird, und ein auf das Positionierelement bzw. auf den Förderendabschnitt befördertes Fördergut durch Zurückziehen des Positionierelements bzw. des Förderendabschnitts von oben auf das darunter liegende Förderorgan der Übergabefördereinrichtung abgegeben wird.

Gemäss der ersten Ausführungsvariante gleitet das Positionierelement beim Vorrücken aus der Ausgangsposition in die Übergabeposition insbesondere auf dem Förderorgan der Übergabefördereinrichtung und wird so durch dieses von unten gestützt.

Der in vorgerückter Position über das Förderorgan des Übergabeförderers geführte Abschnitt des Positionierelements ist insbesondere nicht (mehr) durch seitliche Führungen gestützt. Der besagte Abschnitt ist insbesondere ungeführt.

Zur Übergabe eines Fördergutes von der Zufördereinrichtung an die Übergabefördereinrichtung wird das Fördergut vom Förderorgan der Zufördereinrichtung an das unterhalb des Förderorgans vorrückende oder bereits in die Übergabeposition vorgerückte Positionierelement abgegeben. Das Fördergut liegt in der Übergabeposition über dem Förderorgan der Übergabefördereinrichtung auf dem Positionierelement.

Das Positionierelement wird anschliessend mit hoher Geschwindigkeit zurückgezogen, so dass das Fördergut aufgrund seiner Trägheit ohne Änderung seiner Ausrichtung von oben auf das darunter liegende Förderorgan der Übergabefördereinrichtung fällt. Das heisst, das Fördergut wird bedingt durch seine Trägheit trotz Reibung zwischen dem Fördergut und der Auflagefläche des Positionierelements aufgrund der hohen Geschwindigkeit des zurückweichenden Positionierelement von diesem nicht mitgenommen. Dieser Effekt wird durch ein Positionierelement zusätzlich unterstützt, dessen Auflagefläche eine kleine Rauhigkeit und insbesondere gute Gleiteigenschaften aufweist.

Da die Fallhöhe vergleichsweise gering ist, treten auch keine aerodynamischen Effekte auf, welche die Ausrichtung des Fördergutes während seines Falles auf das Förderorgans der Übergabefördereinrichtung verändern.

Gemäss der zweiten Ausführungsvariante wird zur Übergabe eines Fördergutes von der Zufördereinrichtung an die Übergabefördereinrichtung das am Förderende angeordnete Umlenkorgan und mit diesem der Förderendabschnitt des Bandförderers über die Förderfläche der Übergabefördereinrichtung vorgerückt, so dass das auf dem Förderendabschnitt angeordnete Fördergut über der Förderfläche der Übergabefördereinrichtung zu liegen kommt.

Das Umlenkorgan und mit diesem der Förderendabschnitt des Bandförderers wird anschliessend zurückgezogen, so dass das Fördergut ohne Änderung seiner Ausrichtung von oben auf das darunter liegende Förderorgan der Übergabefördereinrichtung fällt.

Beim Zurückziehen des Förderendabschnitt wird das Förderband vom Fördergut weg um das Umlenkorgan in den Rückführbereich bewegt, so dass keine reibungsbehaftete Relativbewegung zwischen dem Fördergut und dem Förderband parallel zur Förderfläche stattfindet. Entsprechend spielt die Geschwindigkeit des Zurückziehens des Förderendabschnitts eine untergeordnete Rolle.

Das durch den Übergabebereich geführt Förderorgan der Übergabefördereinrichtung wird gemäss der zweiten Ausführungsvariante während der Übergabe des Förderguts insbesondere angehalten. Dadurch wird die Änderung der Ausrichtung des auf das Förderorgan fallenden Förderguts verhindert. Nach erfolgter Übergabe wird das Förderorgan wieder eingeschaltet und nimmt die Förderung des übergebenen Förderguts auf.

Die zweite Ausführungsvariante weist den Vorteil auf, dass das Fördergut direkt vom Förderorgan der Zufördereinrichtung und nicht über ein zusätzliches Stützelement an die Übergabefördereinrichtung übergeben werden kann.

Ferner findet bei der Übergabe des Fördergutes beim Zurückziehen des Förderendabschnitt keine reibungsbehaftete Relativbewegungen zwischen dem Fördergut und dem Förderband statt, welche zu einer unerwünschten Änderung der Ausrichtung des Fördergutes aus dem Förderorgan der Übergabevorrichtung führen kann. Entsprechend muss der Förderbandendabschnitt auch nicht mit hoher Geschwindigkeit zurückgezogen werden.

Das Vorrücken und Zurückziehen des Umlenkorgans, welches bevorzugt eine Umlenkrolle ist, erfolgt über die Verstellvorrichtung.

Enthält die zweite Ausführungsvariante eine Übergabehilfseinrichtung, so werden der Förderendabschnitt der Zufördereinrichtung und der Stützabschnitt der Übergabehilfseinrichtung zwecks Übergabe eines Fördergutes über das Förderorgan der Übergabefördereinrichtung aufeinander zu in eine Übergabeposition bewegt. Der Förderendabschnitt und der Stützabschnitt bilden in der Übergabeposition über dem Förderorgan der Übergabefördereinrichtung insbesondere eine durchgängige Auflagefläche aus, auf welcher das zu übergebende Fördergut zu liegen kommt.

Das Fördergut kommt zur Übergabe sowohl auf dem Förderendabschnitt als auch auf dem Stützabschnitt zu liegen. Das heisst, das Fördergut liegt mit einem ersten Abschnitt dem Förderendabschnitt und mit einem zweiten Abschnitt dem Stützabschnitt auf. Das Fördergut liegt dem Förderendabschnitt und dem Stützabschnitt insbesondere mittig auf. D.h. der oben genannte erste und zweite Abschnitt des Förderguts sind gleich gross.

Durch gleichzeitiges bzw. synchrones Zurückbewegen bzw. Zurückziehen sowohl des Förderendabschnitt als auch des Stützabschnitts in ihre Ausgangspositionen wird eine Lücke nach unten zum Förderorgan der Übergabefördereinrichtung hin freigegeben, durch welche das zu übergebende Fördergut fällt.

Beim Zurückziehen des Stützabschnitts wird das Stützband ebenso vom Fördergut weg um das Umlenkorgan in den Rückführbereich bewegt, so dass keine reibungsbehaftete Relativbewegung zwischen dem Fördergut und dem Stützband parallel zur Stützfläche stattfindet.

Die Ergänzung des vorrückbaren Förderendabschnitts mit einer Übergabehilfseinrichtung der oben beschriebenen Art, weist den Vorteil auf, dass der Förderendabschnitt und der Stützabschnitt zur Übergabe des Fördergutes beim Zurückziehen jeweils nur den halben Weg zurücklegen müssen. Entsprechend können der Förderendabschnitt und der Stützabschnitt auch mit einer kleineren Geschwindigkeiten zurückgezogen werden.

Des Weiteren wirkt die entgegengesetzte Bewegung von Förderendabschnitt und Stützabschnitt beim Zurückziehen einer ungewollten Verschiebung das Förderguts während der Übergabe entgegen. Überdies beginnt das Fördergut erst zu fallen, wenn der Förderendabschnitt und Stützabschnitt beim synchronen Zurückziehen den Kontakt zum Fördergut verloren haben. Dadurch wird ein Kippen des Fördergutes auf das Förderorgan der Übergabefördereinrichtung verhindert. Aus diesem Grund werden der Förderendabschnitt und der Stützabschnitt insbesondere derart synchron zurückgezogen, dass diese gleichzeitig den Kontakt zum Fördergut verlieren.

Der Antrieb des Positionierelementes bzw. die Verstellvorrichtung(en) werden insbesondere über die Steuerungseinrichtung gesteuert.

Die Fördergüter werden insbesondere bereits in jener Ausrichtung auf der Zufördereinrichtung gefördert, in welcher diese in die Fördereinheiten des Sortierförderers transferiert werden.

Die Fördergüter behalten ihre Ausrichtung bei ihrer Übergabe von der Zufördereinrichtung an die Übergabefördereinrichtung insbesondere bei.

Die auf der Förderfläche der Zufördereinrichtung liegend geförderten Fördergüter werden hierzu insbesondere ausgerichtet.

Die Förderanordnung kann hierzu eine der Zufördereinrichtung zugeordnete Ausrichtvorrichtung zum Ausrichten der Fördergüter auf der Förderfläche der Zufördereinrichtung enthalten. Die Ausrichtvorrichtung ist insbesondere im Bereich der Übernahme der Fördergüter von der Zufördereinrichtung angeordnet. Entsprechend findet die Ausrichtung insbesondere mit der Übernahme der Fördergüter auf die Förderfläche der Zufördereinrichtung statt.

Die Ausrichtvorrichtung kann seitlich angeordnete Richtorgane umfassen, welche in der Lage sind, seitlich auf die dem Förderorgan der Zufördereinrichtung aufliegenden Fördergüter einzuwirken. Die Richtorgane können Ausrichtbänder -riemen oder - gurten umfassen welche um Umlenkorgane, wie Umlenkrollen, mit vertikaler Umlenkachse umlaufend geführt sind.

Die von der Zufördereinrichtung an die Übergabefördereinrichtung abgegebenen Fördergüter werden insbesondere getaktet von der Übergabefördereinrichtung an die Fördereinheiten des Sortierförderers übergeben.

Die Fördergüter behalten ihre Ausrichtung bei ihrem Transfer von der Übergabefördereinrichtung an den Sortierförderer insbesondere bei.

Gemäss einer Weiterbildung des Verfahrens wird mit einer Sensoreinrichtung, welche der Zufördereinrichtung zugeordnet ist, mindestens eine der folgenden Eigenschaften eines Förderguts während seiner liegenden Förderung mit der Zufördereinrichtung detektiert:
- die Längsausdehnung des Fördergutes parallel zur Förderrichtung der Zufördereinrichtung oder parallel zur Förderrichtung eines Sortierförderers;
- die Längsausdehnung des Fördergutes quer zur Förderrichtung der Zufördereinrichtung oder quer zur Förderrichtung eines Sortierförderers;
- die Lage des Fördergutes auf der Förderfläche der Zufördereinrichtung;
- die Ausrichtung bzw. Orientierung des Fördergutes auf dem Förderorgan der Zufördereinrichtung.

Die mindestens eine detektierte Eigenschaft wird nun mittels der Auswerteeinrichtung insbesondere mit einem Sollwert oder Sollwertbereich abgeglichen, wobei bei einem Abweichen der mindestens einen ermittelten Eigenschaft vom Sollwert oder Sollwertbereich das Fördergut stromabwärts ausgeschleust wird.

Gemäss einer Weiterbildung des Verfahrens wird mit einer Sensoreinrichtung, welche der Übergabefördereinrichtung zugeordnet ist, mindestens eine der folgenden Eigenschaften der Fördergüter während ihrer liegenden Förderung mit der Übergabefördereinrichtung detektiert:
- die Längsausdehnung des Fördergutes parallel zur Förderrichtung eines Sortierförderers im Transferbereich;
- die Längsausdehnung des Fördergutes quer zur Förderrichtung eines Sortierförderers im Transferbereich;
- die Lage des Fördergutes auf dem Förderorgan der Übergabefördereinrichtung;
- die Ausrichtung bzw. Orientierung des Fördergutes auf dem Förderorgan der Übergabefördereinrichtung.

Die mindestens eine detektierte Eigenschaft wird nun insbesondere mittels der Auswerteeinrichtung mit einem Sollwert oder Sollwertbereich abgeglichen, wobei beim Abweichen der mindestens einen ermittelten Eigenschaft vom Sollwert oder Sollwertbereich das Fördergut stromabwärts ausgeschleust wird.

Das auszuschleusende Fördergut wird beispielsweise durch Schwenken eines Bandförderers der Übergabefördereinrichtung nach unten bzw. nach oben ausgeschleust.

Ein auszuschleusendes Fördergut kann durch Umkehr der Förderrichtung eines Bandförderers der Übergabefördereinrichtung entgegen der Förderrichtung der Übergabefördereinrichtung nach hinten ausgeschleust werden.

Das heisst, alternativ kann das auszuschleusende Fördergut durch Umkehr der Förderrichtung des durch den Übergabebereich führenden Bandförderers der Übergabefördereinrichtung nach hinten ausgeschleust werden.

Die mindestens eine Sensoreinrichtung, der Antrieb des Positionierelements bzw. die Verstellvorrichtung(en) sowie die Antriebsmittel zum Ausschleusen der Fördergüter sind mit der Steuerungseinrichtung verbunden und werden über diese entsprechend gesteuert.

Der Ausdruck "verbunden" im Zusammenhang mit der Steuerungseinrichtung ist nicht auf eine physische Leitungsverbindung beschränkt. Die Verbindung von Komponenten mit der Steuerungseinrichtung kann auch drahtlos sein. Dies, insbesondere wenn es lediglich um die Übertragung von Daten, wie Steuerbefehlen oder Messdaten, geht.

Die Steuerungseinrichtung steuert des Weiteren insbesondere auch den Antrieb der Zufördereinrichtung und der Übergabefördereinrichtung. Die Steuerungseinrichtung sorgt insbesondere für einen getakteten Transfer der Fördergüter an den Sortierförderer. Hierzu stützt sich die Steuerungseinrichtung ebenfalls auf Daten zur Lage der Fördergüter auf dem Förderorgan der Zufördereinrichtung bzw. der Übergabefördereinrichtung, welche von der mindestens einen Sensoreinrichtung ermittelt werden.

Die vorliegende Erfindung gemäss der ersten Ausführungsvariante weist den Vorteil auf, dass mit einfachen, kostengünstigen und vor allem auch platzsparenden Mitteln eine zuverlässige, ausrichtungstreue Übergabe der Fördergüter von der Zufördereinrichtung an die Übergabefördereinrichtung erzielt wird. Der einfache Aufbau von Positionierelement und dazugehörigem Antrieb erlaubt auch ein einfaches Nachrüsten bzw. Umrüsten bestehender Anlagen.

Die vorliegende Erfindung gemäss der zweiten Ausführungsvariante weist ebenfalls den Vorteil auf, dass mit platzsparenden Mitteln eine zuverlässige, ausrichtungstreue Übergabe der Fördergüter von der Zufördereinrichtung an die Übergabefördereinrichtung erzielt wird. Zudem sind die Mittel zur Optimierung der Übergabe der Fördergüter im Bandförderer der Zufördereinrichtung integriert und umfassen keine zusätzlichen Elemente zur Aufnahme der Fördergüter.

Nachfolgend wird der Erfindungsgegenstand anhand von Ausführungsbeispielen, welche in den beiliegenden Figuren dargestellt sind näher erläutert. Es zeigen jeweils schematisch:
- Figur 1:: eine Draufsicht einer als erfindungsgemässe Förderanordnung ausgebildeten Sortieranlage;
- Figur 2:: eine Draufsicht einer Sortieranlage gemäss Figur 1 aus dem Bereich der Übergabefördereinrichtung;
- Figur 3:: eine perspektivische Ansicht eines Positionierelementes mit dazugehörigem Antriebsmechanismus;
- Figur 4:: eine Seitenansicht des Positionierelementes mit dazugehörigem Antriebsmechanismus gemäss Figur 3;
- Figur 5a-g:: Seitenansichten der Förderanordnung aus dem Übergabebereich, welche den Ablauf der Übergabe eines Fördergutes illustrieren;
- Figur 6a-b:: Seitenansichten der Übergabefördereinrichtung, welche den Ausschleusvorgang mittels eines schwenkbaren Bandförderers illustrieren;
- Figur 7:: eine Draufsicht einer weiteren als erfindungsgemässe Förderanordnung ausgebildeten Sortieranlage;
- Figur 8a-e:: Seitenansichten der Förderanordnung gemäss der zweiten Ausführungsvariante aus dem Übergabebereich, welche den Ablauf der Übergabe eines Fördergutes illustrieren;
- Figur 9a-f:: Seitenansichten einer weiteren Förderanordnung gemäss der zweiten Ausführungsvariante aus dem Übergabebereich, wie sie auch in Figur 7 gezeigt ist, welche den Ablauf der Übergabe eines Fördergutes illustrieren;
- Figur 10a-b:: Seitenansichten einer Übergabefördereinrichtung, welche den Ausschleusvorgang gemäss einer weiteren Ausführungsform illustrieren.

Grundsätzlich sind in den Figuren gleiche Teile mit gleichen Bezugszeichen versehen.

Für das Verständnis der Erfindung sind gewisse Merkmale in den Figuren nicht oder nur sehr stark abstrahiert dargestellt. Die nachfolgend beschriebenen Ausführungsbeispiele stehen lediglich beispielhaft für den Erfindungsgegenstand.

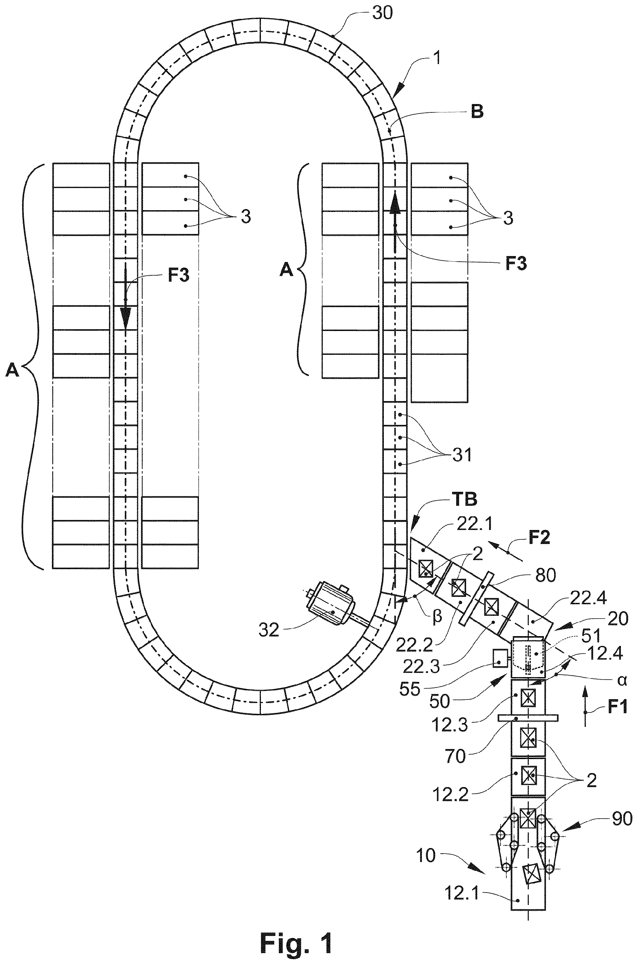

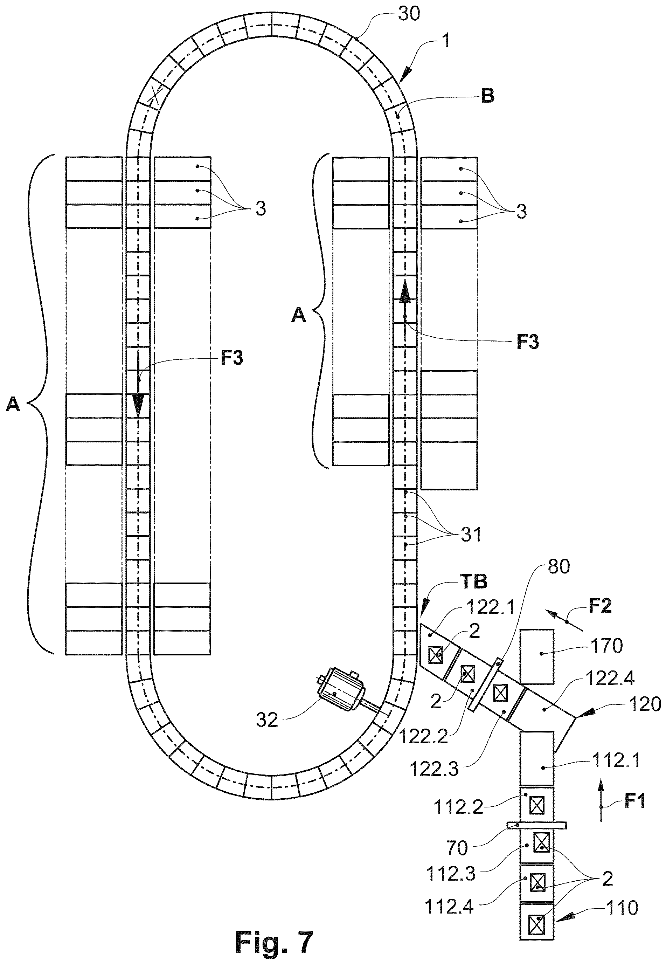

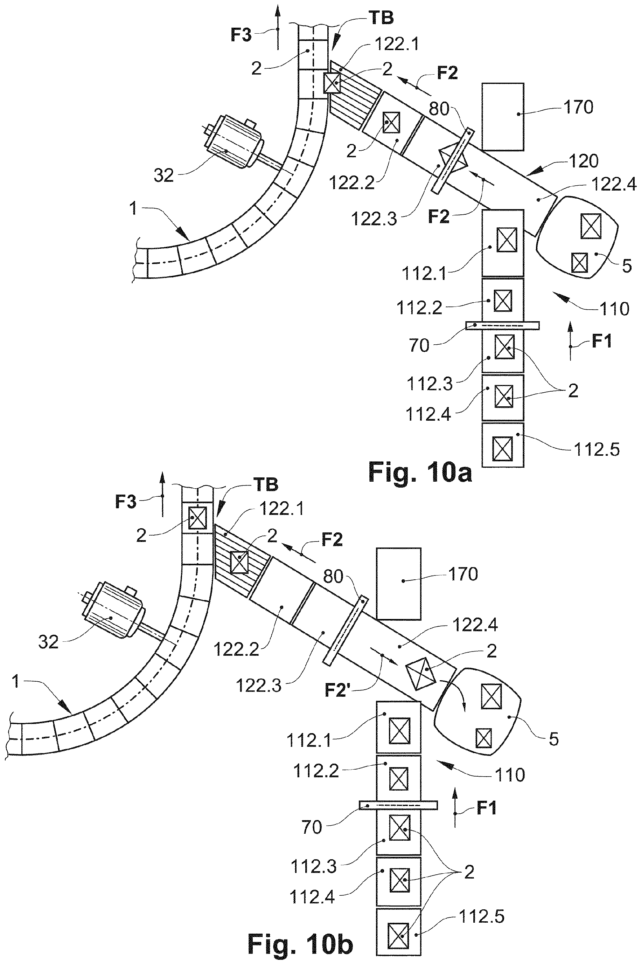

Die **Figur 1** sowie auch die Figuren 7 und 10a bis 10b zeigen eine als Sortieranlage ausgebildete Förderanordnung 1 mit einer Einschleuskonfiguration zum Transferieren bzw. Einschleusen von Fördergütern 2 auf einen Sortierförderer 30. Die Einschleuskonfiguration umfasst eine Zufördereinrichtung 10, 110, mittels welcher die Fördergüter 2 auf einer Förderfläche aufliegend zu einer Übergabefördereinrichtung 20, 120 gefördert und dieser in einem Übergabebereich übergeben werden. Die Übergabefördereinrichtung 20, 120 ist ebenfalls Teil der Einschleuskonfiguration und bildet mit dem Sortierförderer 30 einen Transfer- bzw. Einschleusbereich TB aus, in welchem die Fördergüter 2 in Fördereinheiten 31 des Sortierförderers 30 transferiert bzw. eingeschleust werden.

Die Zufördereinrichtung 10, 110 enthält mehrere in Förderrichtung F 1 hintereinander angeordnete Bandförderer 12.1-12.4, 112.1-112.4, welche mit ihren Förderorganen 11, 111 eine Förderfläche zum liegenden Fördern der Fördergüter 2 ausbilden.

Die Zufördereinrichtung 10,110 fördert die Fördergüter 2 in einem spitzen Zuförderwinkel α von kleiner 70° (Winkelgrad) seitlich, d.h. von der Seite der Übergabefördereinrichtung 20, 120 zu. Der Zuförderwinkel bezieht sich auf den Winkel zwischen den beiden aufeinander zulaufenden Förderrichtungen F1, F2 der Zuförder- 10, 110 und der Übergabefördereinrichtung 20, 120 im Übergabebereich.

Die Förderbahn der Zufördereinrichtung 10, 110 verläuft parallel zur Förderbahn des Sortierförderers 30 im Transferbereich TB sowie geradlinig.

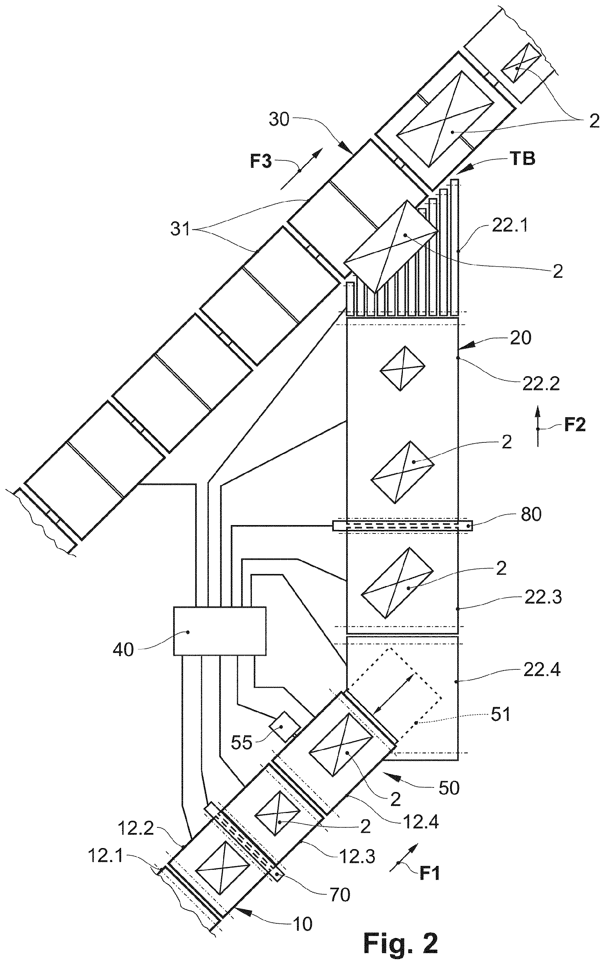

Der Zufördereinrichtung 10, 110 ist eine erste Sensoreinrichtung 70 mit einer optoelektronischen Sensoreinheit zugeordnet. Die Sensoreinrichtung 70 ist mit einer Steuerungseinrichtung 40, 140 verbunden und dient der Ermittlung von fehlplatzierten Fördergütern 2, welche stromabwärts auszuschleusen sind. Mittels der ersten Sensoreinrichtung 70 wird insbesondere die Ausrichtung bzw. Orientierung der Fördergüter 2 auf der Förderfläche der Zufördereinrichtung 10 ermittelt (siehe auch **Figur 2**).

Des Weiteren ist der Zufördereinrichtung 10, 110 eine Ausrichtvorrichtung 90 zugeordnet, an welcher die Fördergüter 2 räumlich auf die Orientierung der Fördereinheiten 31 des Sortierförderers 30 im Transferbereich TB ausgerichtet werden. Die Ausrichtvorrichtung 90 umfasst zwei seitlich angeordnete Ausrichtbänder, welche um voneinander beabstandet angeordnete Umlenkrollen mit vertikaler Drehachse umlaufend geführt sind (siehe Figur 1).

Die Übergabefördereinrichtung 20, 120 enthält ebenfalls mehrere in Förderrichtung F2 hintereinander angeordnete Bandförderer 22.1-22.4, 122.1-122.4, welche mit ihren Förderorganen 21 eine Förderfläche zum liegenden Fördern der Fördergüter 2 ausbilden. Ein Gurt- bzw. Riemenförderer 22.1, 122.1 mit mehreren parallel zueinander verlaufenden Fördergurten bzw. -riemen bildet den abschliessenden, an den Sortierförderer 30 angrenzenden Förderer.

Die Übergabefördereinrichtung 20 fördert die Fördergüter 2 in einem spitzen Transferwinkel β von kleiner 70° (Winkelgrad) seitlich, d.h. von der Seite dem Sortierförderer 30 zu. Der Transferwinkel bezieht sich auf den Winkel zwischen den beiden aufeinander zulaufenden Förderrichtungen F2, F3 der Übergabefördereinrichtung 20 und des Sortierförderers 30 im Transferbereich TB.

Des Weiteren ist der Übergabefördereinrichtung 20, 120 eine zweite Sensoreinrichtung 80 mit einer optoelektronischen Sensoreinheit zugeordnet. Die Sensoreinrichtung 80 ist mit der Steuerungseinrichtung 40, 140 verbunden. Mittels der zweiten Sensoreinrichtung 80 wird unter anderem die Lage bzw. Position der Fördergüter 2 auf der Förderfläche der Übergabefördereinrichtung 20, 120 ermittelt. Die ermittelte Lage der Fördergüter 2 auf der Förderfläche der Übergabefördereinrichtung 20, 120 erlaubt einen punktgenauen und taktsynchronen Transfer der Fördergüter 2 in die Fördereinheiten 31 des Sortierförderers 30.

Der Sortierförderer 30 ist ein als Rundlauf ausgebildeter Schalenförderer mit einer Mehrzahl von entlang einer geschlossenen Förderbahn B voneinander beabstandet angeordneten und miteinander verketteten Förderschalen 31, wie z. B. Kippschalen, welche durch einen Förderantrieb 32 angetrieben werden.

Gemäss der Figur 2 sind die Förderschalen 31 als so genannte Doppelförderschalen mit jeweils zwei in Förderrichtung F3 des Sortierförderers hintereinander angeordneten und über einen tief liegenden Mittelsteg voneinander abgetrennten Teilschalen ausgebildet.

Entlang der Förderbahn B des Sortierförderers 30 sind Abgabezonen A mit jeweils einer Mehrzahl von Abgabestationen 3 angeordnet, an welchen die Fördergüter 2 anhand von definierten Sortierkriterien, wie Zustelladresse, Grösse oder Produktart gezielt abgegeben werden. Die Abgabe der Fördergüter 2 erfolgt durch Schrägstellen der Förderschalen 31 und durch das anschliessende Abrutschen der Fördergüter 2 von der Förderschale.

Die Sortieranlage 1 enthält des Weiteren eine Steuerungseinrichtung 40, 140 zur Steuerung der Sortieranlage 1 bzw. zur koordinierten Steuerung von Komponenten der Sortieranlage, wie z. B. Positionierelement, Förderendabschnitt, Stützabschnitt, Ausschleusvorrichtung, etc. (siehe auch **Figur 2**). Der Förderantrieb 32 des Sortierförderers 30 ist ebenfalls mit der Steuerungseinrichtung 40, 140 verbunden.

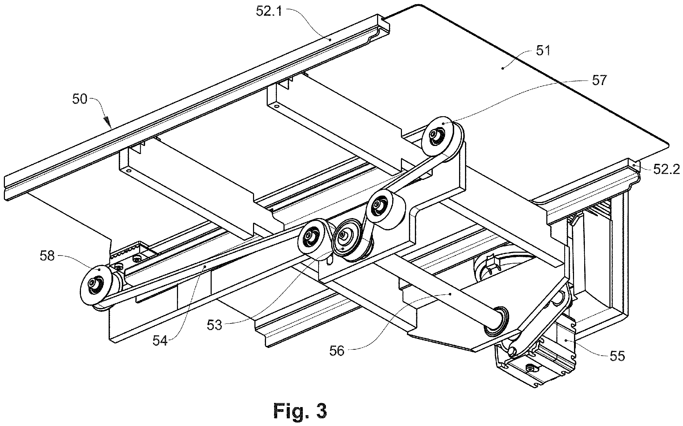

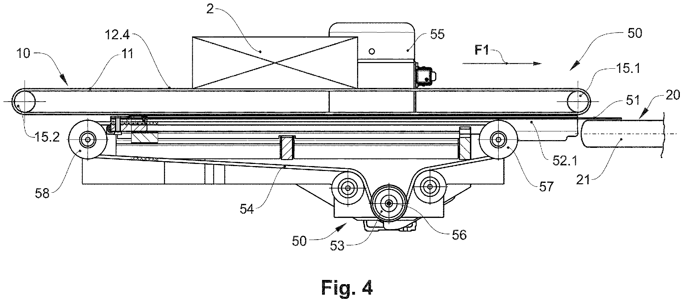

Gemäss der ersten Ausführungsvariante, wie sie in den **Figuren 1 bis 5** dargestellt ist, weist die Zufördereinrichtung 10 eine Positioniervorrichtung 50 mit einem in Förderrichtung F 1 der Zufördereinrichtung 10 über das Förderorgan 21 der Übergabefördereinrichtung 20 in eine Übergabeposition UP ausfahrbaren, flächenförmigen Positionierelement 51 zum Positionieren des zu übergebenden Förderguts 2 über dem Förderorgan 21 der Übergabefördereinrichtung 20 auf (siehe Figur 3 und 4).

Das Positionierelement ist über einen Antrieb 53 zwischen einer Ausgangsposition AP, in welcher das Positionierelement 51 unterhalb eines Förderflächenendabschnitts der Zufördereinrichtung 10 angeordnet ist, und der Übergabeposition UP reversierbar beweglich.

Der Förderflächenendabschnitt wird durch einen in Förderrichtung F1 letzten Bandförderer 12.4 ausgebildet. Dieser weist eine in Förderrichtung F1 vordere Umlenkrolle 15.1 sowie eine hintere Umlenkroll 15.2 auf, um welche ein Förderband 11 umlaufend geführt ist. Die vordere Umlenkrolle 15.1 endet am seitlichen Rand des Förderorgans 21 der Übergabefördereinrichtung 20.

Die Positioniervorrichtung 50 ist insbesondere unterhalb des besagten Bandförderers 12.4 angeordnet.

Zur Einnahme der Übergabeposition UP wird das Positionierelement 51 mittels des Antriebs 53 unter der vorderen Umlenkrolle 15.1 hervor und über das Förderorgan 21 der Übergabefördereinrichtung 20 bewegt bzw. vorgerückt. Zur Einnahme der Ausgangsposition AP wird das Positionierelement 51 unter die vorderen Umlenkrolle 15.1 zurückbewegt bzw. zurückgezogen.

Der Antrieb 53 umfasst einen endlos ausgebildeten Antriebszahnriemen 54, welcher über eine Klemmeinrichtung klemmend am Positionierelement 51 befestigt und um eine vordere und hintere Umlenkrolle 57, 58 geführt ist. Der Antriebszahnriemen 54 ist ferner um eine in zwei Drehrichtungen antreibbare Antriebswelle 56 geführt, welche den Antriebszahnriemen 54 antreibt. Die Antriebswelle 56 wird durch einen Motor 55 angetrieben. Durch Antreiben der Antriebswelle 56 in entsprechender Drehrichtung wird der Antriebszahnriemen 54 und mit diesem das Positionierelement 51 zwischen der Ausgangsposition AP und der Übergabeposition UP bewegt.

Die Positioniervorrichtung enthält ferner zwei seitlich Führungsleisten 52.1, 52.2, welche jeweils eine Führungsnut zur Aufnahme eines seitlichen Randabschnitts des Positionierelements 51 in der Ausgangsposition AP ausbilden.

Zur Einnahme der Übergabeposition UP wird das Positionierelement 51 aus den seitlichen Führungsleisten 52.1, 52.2 heraus bewegt. Allerdings verbleibt ein Endabschnitt des Positionierelements 51 in der Übergabeposition UP in den seitlichen Führungsleisten 52. 1, 52.2, damit das Positionierelement 51 wieder problemlos in die Führungsleisten 52. 1, 52.2 zurückgezogen werden kann.

Zur Durchführung des Verfahrens wird die Förderfläche der Zufördereinrichtung 10 mit Fördergütern 2 beschickt, welche mittels der Sortieranlage 1 zu sortieren sind. Die der Zufördereinrichtung 10 zugeführten Fördergüter 2 werden mittels der Ausrichtvorrichtung 90 auf der Förderfläche der Zufördereinrichtung 10 ausgerichtet. Im vorliegenden Ausführungsbeispiel sind die Fördergüter 2 quaderförmige Pakete. Diese werden mit ihrer Längsseite, welche die grösste Längenausdehnung des Paketes umfasst, parallel zur Förderrichtung F1 ausgerichtet. Da die Förderrichtung F1 der Zufördereinrichtung 10 parallel zur Förderrichtung F3 des Sortierförderers 30 im Transferbereich TB verläuft, stellt diese Ausrichtung sicher, dass die Pakete mit ihrer Längsseite voran auf die Förderschalen 31 des Sortierförderers 30 transferiert. Da die Längsseite der Förderschalen 31, also die Seite mit der grössten Längenausdehnung, ebenfalls parallel zur Förderrichtung F3 des Sortierförderers 30 verläuft, wird das Paket 2 mit der optimalen Orientierung bzw. Ausrichtung, d.h. Längsseite auf Längsseite, in die Förderschale 31 transferiert.

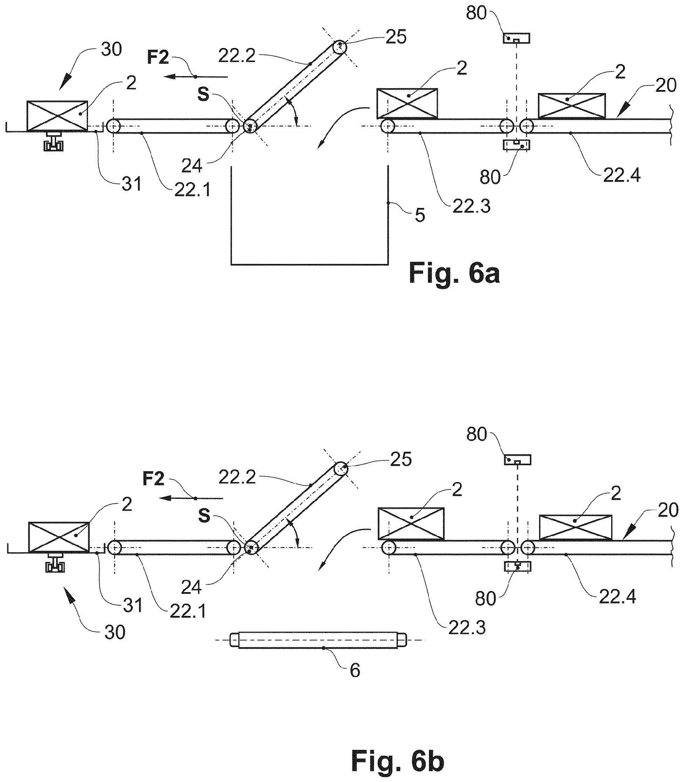

Die folglich auf die Orientierung der Förderschalen 31 im Transferbereich TB ausgerichteten Fördergüter 2 werden auf der Förderfläche der Zufördereinrichtung 10 liegend in Förderrichtung F1 zur Übergabefördereinrichtung 20 hin gefördert. Die erste Sensoreinrichtung 70 ermittelt nun mittels der mindestens einen optoelektronischen Sensoreinheit und einer nachgeordneten Auswerteeinrichtung die Ausrichtung des Förderguts 2 auf der Förderfläche. Ist die Ausrichtung des Förderguts 2 nicht nach Vorgabe, so veranlasst die Steuerungseinrichtung 40 die Ausschleusung des fehlplatzierten Fördergutes 2 stromabwärts. Der Vorgang des Ausschleusens wird weiter unten anhand der Figuren 6a-6b und 10a-10b näher erläutert.

Sobald das Fördergut 2 das Förderende an der vorderen Umlenkrolle 15.1 des letzten Bandförderers 12.4 der Zufördereinrichtung 10 erreicht, wird das Positionierelement 51 bewegungssynchron zum Fördergut 2 in Förderrichtung F 1 der Zufördereinrichtung 10 über die Förderfläche bzw. das Förderorgan 21 der Übergabeförderereinrichtung 20 vorgerückt. Das Fördergut 2 bewegt sich hierbei über das Förderende der Zufördereinrichtung 10 hinaus auf das unterhalb der Förderfläche vorrückende Positionierelement 51. Bei Erreichen der Übergabeposition UP liegt das Fördergut 2 vollständig dem Positionierelement 51 auf. Das biegeweiche und daher nicht selbsttragende Positionierelement 51 liegt seinerseits dem Förderorgan 21 der Übergabefördereinrichtung 20 auf und wird durch dieses von unten gestützt.

Durch schnelles, ruckartiges Zurückziehen des Positionierelements 51 in seine Ausgangsposition AP fällt das Fördergut 2 nach unten auf das nun frei liegende Förderorgan 21 der Übergabefördereinrichtung 20. Aufgrund der Trägheit des Fördergutes 2 und der niedrigen Rauhigkeit bzw. der guten Gleiteigenschaften der Auflagefläche des Positionierelementes 51 ist die durch das zurückweichende Positionierelement 51 auf das Fördergut 2 wirkende, reibungsbedingte Mitnahmekraft derart gering, dass keine unerwünschte Änderung der Ausrichtung des Fördergutes 2 im Raum erfolgt.

Entsprechend wird das übergebene Fördergut 2 mit gleichbleibender Ausrichtung und geänderter Förderrichtung F2 mittels der Übergabefördereinrichtung 20 in Richtung Transferbereich TB liegend gefördert.

Die zweite Sensoreinrichtung 80 ermittelt mittels der mindestens einen optoelektronischen Sensoreinheit und einer nachgeordneten Auswerteeinrichtung unter anderem die Lage des Förderguts 2 relativ zur Förderfläche. Die ermittelte Lageinformation dient der Steuerungseinrichtung 40 für einen punktgenauen, taktsynchronen Transfer der Fördergüter 2 in die Förderschalen 31 des Sortierförderers 30. Je nach Lage des Förderguts 2 auf der Förderfläche der Übergabefördereinrichtung 20 kann die Steuerungseinrichtung 40 durch Beschleunigen oder Abbremsen des Förderbandes 21 eines Förderers 22.1-22.2 der Übergabefördereinrichtung 20 den Transfer des Fördergutes 2 verzögern oder beschleunigen.

Grundsätzlich kann auch die zweite Sensoreinrichtung 80 dazu ausgelegt sein, fehlplatzierte Fördergüter 2, also Fördergüter 2 mit einer von einer Vorgabe abweichenden Ausrichtung, zu detektieren. Die von der zweiten Sensoreinrichtung 80 detektierten Fördergüter 2, werden stromabwärts ausgeschleust, wie z. B. in Figur 6a und 6b gezeigt.

Gemäss einer besonderen Ausführungsform einer Übergabefördereinrichtung 20 nach **Figur 6a und 6b****,** umfasst diese einen Bandförderer 22.2, welcher um die in Förderrichtung F2 vordere Umlenkrolle 24 schwenkbar gelagert ist. Die Schwenkbarkeit dient dem Ausschleusen von fehlplatzierten Fördergütern 2, welche von der ersten oder zweiten Sensoreinrichtung 70, 80 detektiert wurden. Hierzu ist im vorliegenden Beispiel der Bandförderer 22.2 um die Schwenkachse S nach oben schwenkbar, wodurch sich im Anschluss an einen vorgeordneten Bandförderer 22.3 eine Förderlücke öffnet. Ein auf dem vorgeordneten Bandförderer 22.3 gefördertes Fördergut 2 fällt so am Förderende des Bandförderers 22.3 durch die Förderlücke nach unten in einen Sammelbehälter 5 für ausgeschleuste Fördergüter 2 (Figur 6a) oder auf das Förderband eines Ausschleusförderers 6 für ausgeschleuste Fördergüter 2 (Figur 6b).

Alternativ, kann ein fehlplatziertes Fördergut 2 auch durch den Bandförderer 122.4 der Übergabefördereinrichtung 120 ausgeschleust werden, welcher durch den Übergabebereich führt (siehe **Figuren 10a und 10b**)**.** Hierzu ist das Förderband 121 des Bandförderers 122.4 in zwei Richtungen betreibbar. Zum Ausschleusen eines übergebenen Fördergutes 2 wird das Förderband 121 in die der Förderrichtung F2 entgegengesetzte Richtung F2' angetrieben, so dass das Fördergut 2 entgegen der Förderrichtung F2 nach hinten ausgeschleust wird. Am hinteren Ende des Bandförderers 122.4 kann ein Sammelbehälter 5 oder ein Ausschleusförderer analog zu Figur 6b (nicht gezeigt) angeordnet sein, welcher die ausgeschleusten Fördergüter 2 wegfördert.

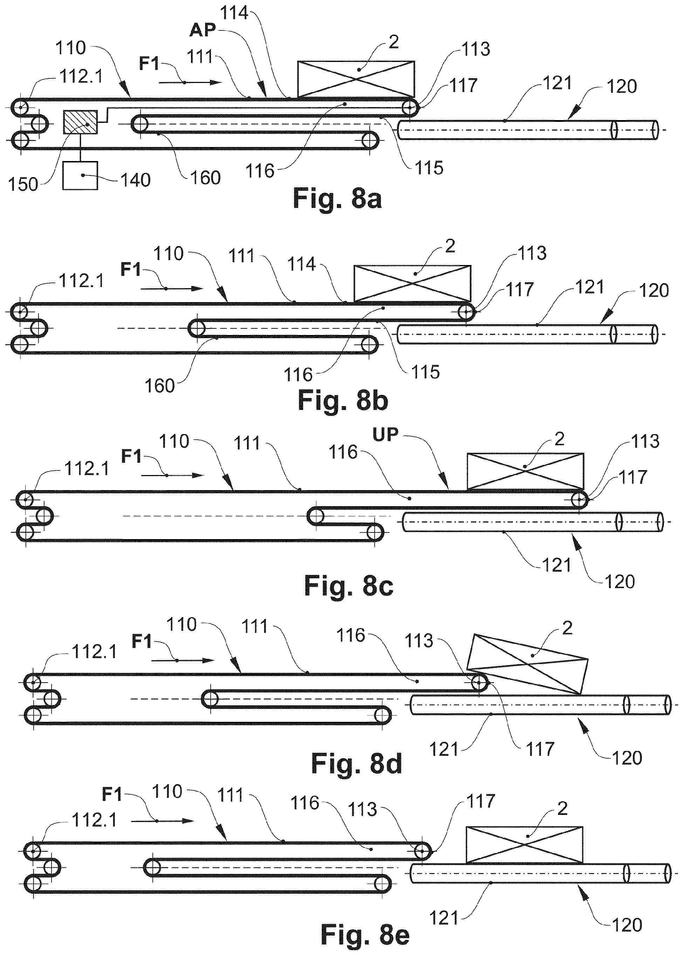

Die **Figuren 8a bis 8e** zeigen eine Ausführungsform gemäss der zweiten Ausführungsvariante. Diese zeichnet sich durch eine Zufördereinrichtung 110 mit einem Endlosbandförderer 112.1 auf, dessen Förderende 117 im Übergabebereich endet. Das Förderende 117 wird durch eine in Förderrichtung F1 vordere Umlenkrolle 113 ausgebildet, um welche das Förderband 111 umgelenkt wird.

Die vordere Umlenkrolle 113 wirkt mit einer Verstellvorrichtung 150 zusammen, mittels welcher sich die vordere Umlenkrolle 113 in Förderrichtung F1 über das Förderorgan 121 der Übergabefördereinrichtung 120 in eine Übergabeposition UP vorrücken und entgegen der Förderrichtung F1 in eine Ausgangsposition AP zurückziehen lässt. Entsprechend lässt sich dadurch auch ein Förderendabschnitt 116 zusammen mit einem auf diesem angeordneten Fördergut 2 zwecks Abgabe des Förderguts 2 über das Förderorgan 121 der Übergabefördereinrichtung 120 in eine Übergabeposition UP vorrücken und nach Übergabe des Förderguts 2 entgegen der Förderrichtung F1 in eine Ausgangsposition AP zurückziehen.

Die Verstellvorrichtung 150 umfasst des Weiteren einen Schlaufenspeicher zur Ausbildung einer Förderbandreserve, welche die Bereitstellung einer Förderbandlänge beim Vorrücken des Förderendabschnitt 116 ermöglicht. Der Schlaufenspeicher enthält mindestens eine Umlenkrolle 161, um welche das Förderband 111 schlaufenartig geführt ist, wodurch eine Förderbandlänge in einer Speicherschlaufe 160 gespeichert wird. Die mindestens eine Umlenkrolle 161 ist zur Ausbildung der Speicherschlaufe 160 bzw. zur Auflösung der Speicherschlaufe 160 bezüglich ihrer Drehachse beweglich gelagerte.

So wird die mindestens eine Umlenkrolle 161 gemäss vorliegendem Ausführungsbeispiel beim Vorrücken des Förderendabschnitts 116 unter Verkleinerung bzw. Auflösung der Speicherschlaufe und Freigabe einer Förderbandlänge in Förderrichtung F1 der Zufördereinrichtung 110 mitbewegt. Beim Zurückweichen des Förderendabschnitts 116 wird die mindestens eine Umlenkrolle 161 unter Ausbildung bzw. Vergrösserung einer Speicherschlaufe 160 und Speicherung einer Förderbandlänge entgegen der Förderrichtung F1 der Zufördereinrichtung 110 mitbewegt.

Zur Durchführung des Verfahrens gemäss der zweiten Ausführungsvariante wird das Fördergut 2 auf dem Förderband 111 des Bandförderers 112.1 in Richtung Förderendabschnitt 116 gefördert. Mit Erreichen des Förderendabschnittes 116 wird dieser zusammen mit dem auf diesem liegenden Fördergut 2 in Förderrichtung F 1 der Zufördereinrichtung 110 über das Förderorgan 121 der Übergabefördereinrichtung 120 vorgerückt. Dies erfolgt durch ein Vorrücken der Umlenkorgans 113 am Förderende unter Freigabe einer Förderbandreserve.

Spätestens mit Erreichen der Übergabeposition UP steht das Förderband 111 des Bandförderers 112.1 still. Zur Übergabe des Förderguts 2 auf das darunter liegende Förderorgan 121 der Übergabefördereinrichtung 120 wird der Förderendabschnitt 116 wieder zurückgezogen. Dies erfolgt durch ein Zurückverschieben des Umlenkorgans 113 am Förderende, wobei das Förderband 111 unterhalb der Förderfläche unter Ausbildung einer Förderbandreserve zurückgezogen wird. Dies weist den Vorteil auf, dass beim Zurückziehen des Förderendabschnitts 116 zwischen dem Fördergut 2 und dem darunter liegenden Förderband 111 keine Relativbewegung parallel zur Förderfläche stattfindet.

Durch das Zurückziehen des Förderendabschnitts 116 fällt das Fördergut 2 nach unten auf das Förderorgan 121 der Übergabefördereinrichtung 120. Die übrigen Verfahrensschritte entsprechen jenen, im Zusammenhang mit der ersten Ausführungsvariante offenbarten Verfahrensschritte weiter oben.

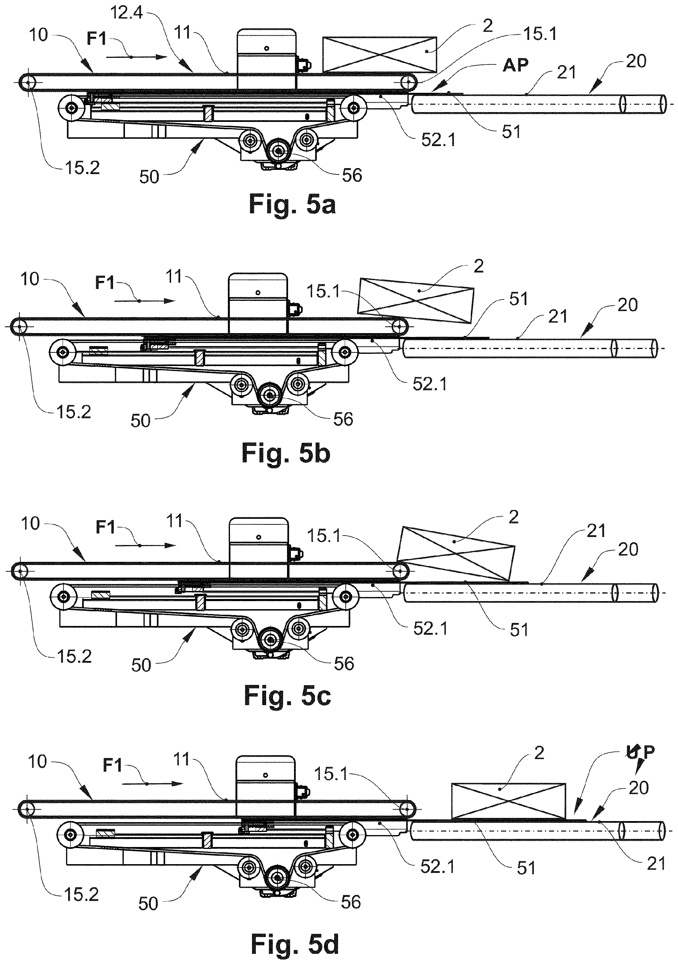

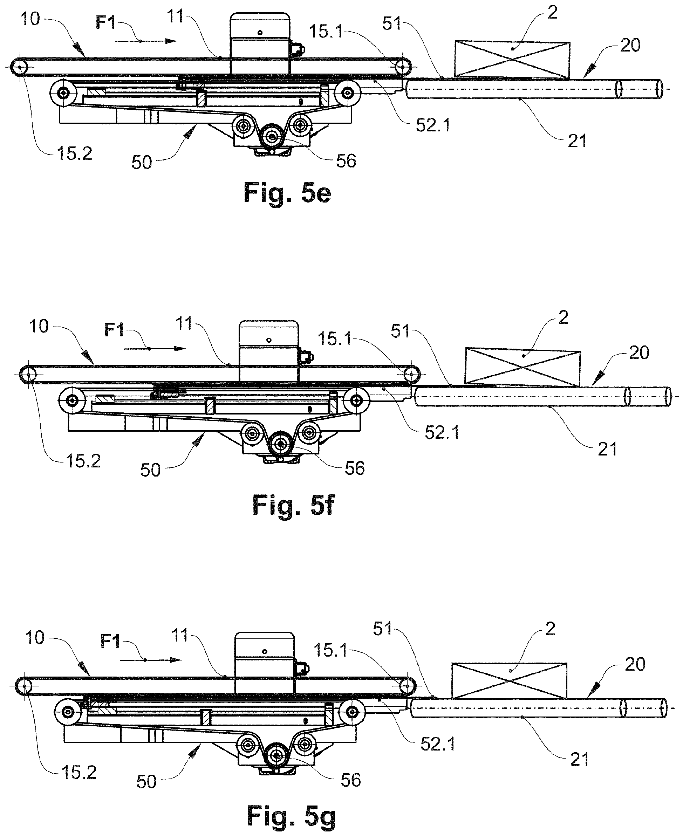

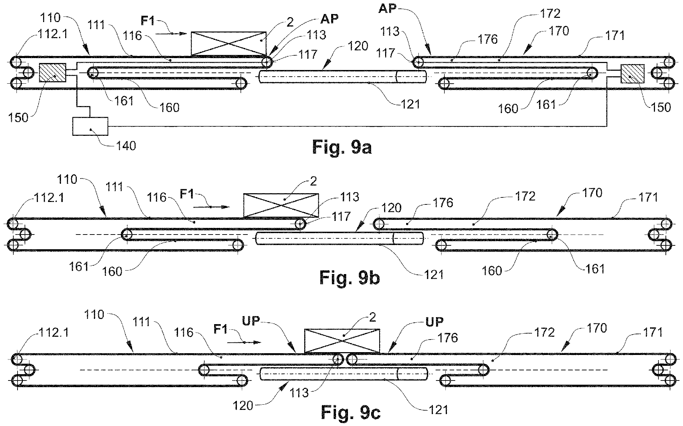

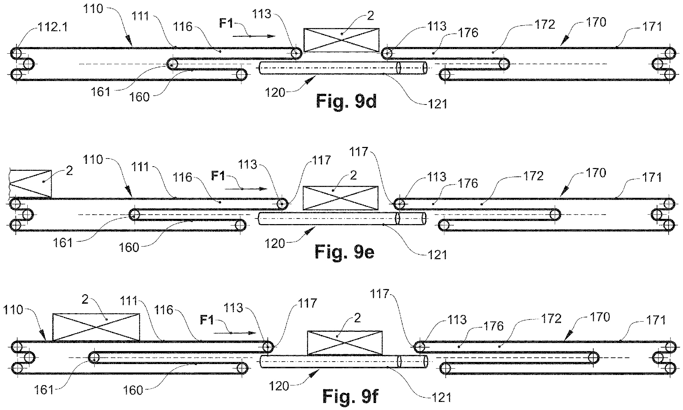

Obwohl das Positionierelement 51 gemäss der ersten Ausführungsvariante nach Figur 1 bis 5 beim Vorrücken in die Übergabeposition direkt dem Förderorgan 21 der Übergabefördereinrichtung 20 aufliegt und die Fallhöhe des Fördergutes 2 im Vergleich zum Stand der Technik erheblich reduziert ist, wird das Fördergut bei der Übergabe nach unten gekippt (siehe z. B. Figur 5c). Auch gemäss der Ausführungsform nach Figur 8a bis 8e findet ein Kippen statt. Das Kippen des Fördergutes 2 birgt die Gefahr einer ungewollten Lageänderung. Dieser Problematik wird mit einer Weiterbildung der zweiten Ausführungsvariante gemäss den **Figuren 9a bis 9f** begegnet.

Diese Weiterbildung umfasst die Einrichtung gemäss Figur 8a bis 8e mit vorrückbarem Förderendabschnitt 116 und Verstellvorrichtung 150.

Zusätzlich weist die Weiterbildung eine dem Förderendabschnitt 116 der Zufördereinrichtung 110 gegenüber liegend und auf der anderen Seite der Übergabefördereinrichtung 120 angeordnete Übergabehilfseinrichtung 170 mit einem, ein endlos umlaufendes Stützband 171 umfassenden Stützbandförderer 172. Der Stützbandförderer 172 bildet einen zum Förderendabschnitt 116 hin gerichteten Stützabschnitt 176 mit einem Stützende 117 aus, an welchem das Stützband 171 über eine Umlenkrolle 113, aus einem Stützbereich in einen Rückführbereich umgelenkt wird.

Grundsätzlich entspricht der Stützbandförderer 172 bezüglich Aufbau dem Bandförderer 112.1 mit dem Unterschied, dass dieser nicht zur Förderung sondern zur Stützung des Förderguts 2 in der Übergabeposition UP dient.

Der Stützabschnitt 176 wird nun zur Positionierung des zu übergebenden Förderguts 2 über dem Förderorgan 121 der Übergabefördereinrichtung 120 gleichzeitig mit dem Förderendabschnitt 116 der Zufördereinrichtung 110 mittels einer Verstellvorrichtung 150 entgegen der Förderrichtung F1 der Zufördereinrichtung 110 zum Förderendabschnitt 116 der Zufördereinrichtung 110 hin in eine über dem Förderorgan 121 der Übergabefördereinrichtung 120 angeordnete Übergabeposition UP vorgerückt. Die beiden in die Übergabeposition UP vorgerückten Abschnitte 116, 176, d.h. Förderendabschnitt 116 und Stützabschnitt 176, treffen sich über dem Förderorgan 121 der Übergabefördereinrichtung 120. Der Förderendabschnitt 116 und der Stützabschnitt 176 bilden in der Übergabeposition UP eine gemeinsame Auflage für das zu übergebende Fördergut 2 aus. Endsprechend liegen die Auflageflächen des Förderendabschnitt 116 und des Stützabschnitts 176 in einer gemeinsamen Ebene.

Die Verstellvorrichtung 150 der Übergabehilfseinrichtung 170 ist analog zur Verstellvorrichtung 150 für den Förderendabschnitt 116 ausgebildet und ist zum Verschieben des endseitigen Umlenkorgans 113 parallel zur Förderrichtung F1 der Zuführeinrichtung ausgelegt. Entsprechend ist die Verstellvorrichtung 150 auch zur Ausbildung einer Stützbandreserve ausgelegt sein, welche die Bereitstellung einer Stützbandbandlänge beim Vorrücken des Stützabschnitts 176 ermöglicht. Die Stützbandreserve wird auch hier durch einen Schlaufenspeicher gebildet, bei welchem das Stützband 176 analog zum Förderendabschnitt 116 um mindestens eine beweglich gelagerte Umlenkrolle 161 geführt ist.

Zur Durchführung des Verfahrens gemäss der Weiterbildung zur zweiten Ausführungsvariante wird das Fördergut 2 auf dem Förderband 111 des Bandförderers 112.1 in Richtung Förderendabschnitt 116 gefördert. Mit Erreichen des Förderendabschnittes 116 wird dieser zusammen mit dem auf diesem liegenden Fördergut 2 in Förderrichtung F 1 der Zufördereinrichtung 110 über das Förderorgan 121 der Übergabefördereinrichtung 120 vorgerückt. Dies erfolgt durch ein Vorrücken der Umlenkorgans 113 am Förderende unter Freigabe einer Förderbandreserve.

Gleichzeitig wird der Stützabschnitt 176 entgegen der Förderrichtung F1 der Zufördereinrichtung 110 über das Förderorgan 121 der Übergabefördereinrichtung 120 zum Förderendabschnitt 116 hin in die Übergabeposition UP vorgerückt. Dies erfolgt ebenfalls durch ein Vorrücken des Umlenkorgans 113 am Förderende unter Freigabe einer Förderbandreserve.

Der Förderendabschnitt 116 und der Stützabschnitt 176 treffen bei der Einnahme ihrer Übergabeposition UP über dem Förderorgan 121 der Übergabefördereinrichtung 120 zusammen, insbesondere in der Mitte des Förderorgans 121.

Das Fördergut 2 wird mittels des Förderbands 111 des Bandförderers 112.1 mit einem Teilabschnitt auf die Stützfläche des Stützabschnitts 176 gefördert, so dass das Fördergut 2 mit einem ersten Abschnitt dem Förderendabschnitt 116 und mit einem zweiten Abschnitt dem Stützabschnitt 176 aufliegt. Zur Übergabe des Förderguts 2 auf das darunter liegende Förderorgan 121 der Übergabefördereinrichtung 120 werden der Förderendabschnitt 116 und der Stützabschnitt 176 synchron zurückgezogen. Dies erfolgt jeweils durch ein Zurückverschieben des Umlenkorgans 113 am Förderende bzw. Stützende. Sobald der Förderendabschnitt 116 und der Stützabschnitt 176 während des Zurückziehens den Kontakt zum Fördergut 2 verlieren, was vorzugsweise gleichzeitig erfolgt, fällt das Fördergut 2 ohne zu kippen auf das darunter liegende Förderorgan 121 der Übergabefördereinrichtung 120.

Auch hier findet beim Zurückziehen des Förderendabschnitts 116 und des Stützabschnitts 176 zwischen dem Fördergut 2 und dem darunter liegenden Förderband 111 sowie Stützband 171 keine Relativbewegung parallel zur Förderfläche bzw. Auflagefläche statt.

## Patentansprüche

1. **Förderanordnung** (1), enthaltend:
- eine Zufördereinrichtung (10) mit mindestens einem flächenförmigen Förderorgan (11);
- eine Übergabefördereinrichtung (20) mit mindestens einem flächenförmigen Förderorgan (21);
- eine Steuerungseinrichtung (40);
zum ausrichtungstreuen Abgeben von liegend geförderten Fördergütern (2) von der Zufördereinrichtung (10) an die Übergabefördereinrichtung (20), wobei die Zufördereinrichtung (10) eine Positioniervorrichtung (50) mit einem in Förderrichtung (F1) der Zufördereinrichtung (10) über das Förderorgan (21) der Übergabefördereinrichtung (20) in eine Übergabeposition (UP) ausfahrbaren, flächenförmigen Positionierelement (51) zum Positionieren des abzugebenden Förderguts (2) über dem Förderorgan (21) der Übergabefördereinrichtung (20) aufweist,
**dadurch gekennzeichnet, dass**
die Positioniervorrichtung (50) so ausgelegt ist, dass das flächige Positionierelement (51) in der Übergabeposition (UP) unter der Last eines diesem aufliegenden Fördergutes (2) dem Förderorgan (21) der Übergabefördereinrichtung (20) aufliegt und durch das Förderorgan (21) von unten gestützt wird.

2. Förderanordnung nach Anspruch 1, **dadurch gekennzeichnet, dass** das Positionierelement (51) biegeweich bzw. flexibel und insbesondere nicht selbsttragend ausgebildet ist.

3. Förderanordnung nach einem der Ansprüche 1 bis 2, **dadurch gekennzeichnet, dass** das Positionierelement (51) eine Dicke von 0.5 bis 5 mm, insbesondere von 1 bis 2 mm aufweist.

4. Förderanordnung nach einem der Ansprüche 1 bis 3, **dadurch gekennzeichnet, dass** das Positionierelement (51) in der Ausgangsposition (AP) durch seitliche Führungen (52.1, 52.2) geführt ist, und zur Einnahme der Übergabeposition (UP) aus den seitlichen Führungen (52.1, 52.2) über das Förderorgan (21) der Übergabefördereinrichtung (20) heraus bewegbar ist.

5. Förderanordnung nach einem der Ansprüche 1 bis 4, **dadurch gekennzeichnet, dass** das Positionierelement (51) über einen Antrieb (53) zwischen einer Ausgangsposition (AP), in welcher das Positionierelement (51) unterhalb der Förderfläche der Zufördereinrichtung (10) zurückgezogen ist und der Übergabeposition (UP) reversierbar bewegbar ist.

6. **Förderanordnung** (100), enthaltend:
- eine Zufördereinrichtung (110) mit mindestens einem Endlosbandförderer (112.1);
- eine Übergabefördereinrichtung (120) mit mindestens einem flächenförmigen Förderorgan (121);
- eine Steuerungseinrichtung (140);
zum ausrichtungstreuen Abgeben von liegend geförderten Fördergütern (2) von der Zufördereinrichtung (110) an die Übergabefördereinrichtung (120), wobei der Endlosbandförderer (112.1) einen Förderendabschnitt (116) ausbildet, in welchem das Förderband (111) über ein am Förderende (117) angeordnetes Umlenkorgan (113) aus einen Förderbereich in einen Rückführbereich umgelenkt wird,
**dadurch gekennzeichnet, dass**
der Förderendabschnitt (116) mittels einer Verstellvorrichtung (150) zum Positionieren des zu übergebenden Förderguts (2) über dem Förderorgan (121) der Übergabefördereinrichtung (120) aus einer Ausgangsposition (AP) in Förderrichtung (F1) der Zufördereinrichtung (110) in eine über dem Förderorgan (121) der Übergabefördereinrichtung (120) angeordnete Übergabeposition (UP) vorrückbar ist.

7. Förderanordnung nach Anspruch 6, **dadurch gekennzeichnet, dass** das Umlenkorgan (113) mittels der Verstellvorrichtung (150) entlang der Förderrichtung (F1) der Zufördereinrichtung (110) reversierbar bewegbar ist.

8. Förderanordnung nach einem der Ansprüche 6 bis 7, **dadurch gekennzeichnet, dass** die Verstellvorrichtung (150) zur Ausbildung einer Förderbandreserve zum Vorrücken des Förderendabschnitts (116) in die Übergabeposition (UP) ausgelegt ist.

9. Förderanordnung nach einem der Ansprüche 6 bis 8, **gekennzeichnet durch** eine dem Förderendabschnitt (116) gegenüber liegend und auf der anderen Seite der Übergabefördereinrichtung (120) angeordneten Übergabehilfseinrichtung (170) mit einem ein Stützband (171) umfassenden Stützbandförderer (172), welcher einen zum Förderendabschnitt (116) hin gerichteten Stützabschnitt (176) mit einem Stützende (117) ausbildet, an welchem das Stützband (111) über ein Umlenkorgan (113) aus einem Stützbereich in einen Rückführbereich umgelenkt wird, wobei der Stützabschnitt (176) mittels einer Verstellvorrichtung (150) zum Positionieren des zu übergebenden Förderguts (2) über dem Förderorgan (121) der Übergabefördereinrichtung (120) entgegen der Förderrichtung (F1) der Zufördereinrichtung (110) in eine über dem Förderorgan (121) der Übergabefördereinrichtung (120) angeordnete Übergabeposition (UP) vorrückbar ist, so dass der Förderendabschnitt (116) und der Stützabschnitt (176) in der Übergabeposition eine gemeinsame Auflage für das zu übergebende Fördergut (2) ausbilden.

10. Förderanordnung nach einem der Ansprüche 1 bis 9, **gekennzeichnet durch** eine der Zufördereinrichtung (10, 110) zugeordneten Sensoreinrichtung (70) zum Detektieren von wenigstens einer der folgenden Eigenschaften der Fördergüter (2) während ihrer liegenden Förderung mit der Zufördereinrichtung (10, 110):
- die Längsausdehnung des Fördergutes (2) parallel zur Förderrichtung (F1) der Zufördereinrichtung (10, 110) oder parallel zur Förderrichtung (F3) des Sortierförderers (30);
- Längsausdehnung des Fördergutes (2) quer Förderrichtung (F1) der Zufördereinrichtung (10, 110) oder quer zur Förderrichtung (F3) des Sortierförderers (30)
- die Lage des Fördergutes (2) auf dem Förderorgan (11) der Zufördereinrichtung (10, 110);
- die Ausrichtung bzw. Orientierung des Fördergutes (2) auf dem Förderorgan (11) der Zufördereinrichtung (10, 110).

11. Förderanordnung nach einem der Ansprüche 1 bis 10, **gekennzeichnet durch** eine der Übergabefördereinrichtung (20, 120) zugeordneten Sensoreinrichtung (80) zum Detektieren von wenigstens einer der folgenden Eigenschaften der Fördergüter (2) während ihrer liegenden Förderung mit der Übergabefördereinrichtung (20, 120):
- die Längsausdehnung des Fördergutes (9) parallel zur Förderrichtung (F3) des Sortierförderers (30) im Transferbereich;
- Längsausdehnung des Fördergutes (2) quer Förderrichtung (F1) der Zufördereinrichtung (10, 110) oder quer zur Förderrichtung (F3) des Sortierförderers (30)
- die Lage des Fördergutes (2) auf dem Förderorgan (21) der Übergabefördereinrichtung (20, 120);
- die Ausrichtung bzw. Orientierung des Fördergutes (2) auf dem Förderorgan (21) der Übergabefördereinrichtung (20, 120).

12. **Verfahren** zum Abgeben von Fördergütern (9) von einer Zufördereinrichtung (10, 110) an eine Übergabefördereinrichtung (20, 120) mittels einer Förderanordnung (1) nach einem der Ansprüche 1 bis 11,
**dadurch gekennzeichnet, dass**
zum Abgeben eines Fördergutes (2) an die Übergabefördereinrichtung (20, 120) das Positionierelement (51) bzw. der Förderendabschnitt (116) in Zuförderrichtung (F1) aus der Ausgangsposition (AP) über das Förderorgan (21) der Übergabefördereinrichtung (20, 120) in die Übergabeposition (UP) vorgerückt wird, und das auf dem Positionierelement (51) bzw. dem Förderendabschnitt (116) liegende Fördergut (2) durch Zurückziehen des Positionierelement (51) bzw. dem Förderendabschnitt (116) von oben auf das darunter liegende Förderorgan (21) der Übergabefördereinrichtung (20, 120) abgegeben wird.

13. Verfahren nach Anspruch 12, **dadurch gekennzeichnet, dass** das Positionierelement (51) beim Vorrücken aus der Ausgangsposition (AP) in die Übergabeposition (UP) auf dem Förderorgan (21) der Übergabefördereinrichtung (20, 120) gleitet und durch dieses gegen unten abgestützt wird.

14. Verfahren nach einem der Ansprüche 12 bis 13, **dadurch gekennzeichnet, dass** mit der Sensoreinrichtung (70), welche der Zufördereinrichtung (10, 110) zugeordnet ist, mindestens eine der folgenden Eigenschaften eines Förderguts (2) während seiner liegenden Förderung mit der Zufördereinrichtung (10, 110) detektiert wird:
- die Längsausdehnung des Fördergutes (9) parallel zur Förderrichtung (F1) der Zufördereinrichtung (10, 110) oder parallel zur Förderrichtung (F3) des Sortierförderers (30);
- die Lage des Fördergutes (2) auf dem Förderorgan (11) der Zufördereinrichtung (10, 110);
- Ausrichtung bzw. Orientierung des Fördergutes (2) auf dem Förderorgan (11) der Zufördereinrichtung (10, 110);
und die mindestens eine detektierte Eigenschaft mit einem Sollwert oder Sollwertbereich abgeglichen wird und beim Abweichen der mindestens einen ermittelten Eigenschaft vom Sollwert oder Sollwertbereich das Fördergut (2) stromabwärts ausgeschleust wird.

15. Verfahren nach einem der Ansprüche 12 bis 14, **dadurch gekennzeichnet, dass** mit der Sensoreinrichtung (80), welche der Übergabefördereinrichtung (20, 120) zugeordnet ist, mindestens einer der folgenden Eigenschaften der Fördergüter (2) während ihrer liegenden Förderung mit der Übergabefördereinrichtung (20, 120) detektiert wird:
- die Längsausdehnung des Fördergutes (9) parallel zur Förderrichtung (F3) des Sortierförderers (30) im Transferbereich (TB);
- die Lage des Fördergutes (2) auf dem Förderorgan (21) der Übergabefördereinrichtung (20, 120);
- Ausrichtung bzw. Orientierung des Fördergutes (2) auf dem Förderorgan (21) der Übergabefördereinrichtung (20, 120),
und die mindestens eine detektierte Eigenschaft mit einem Sollwert oder Sollwertbereich abgeglichen wird und beim Abweichen der mindestens einen ermittelten Eigenschaft vom Sollwert oder Sollwertbereich das Fördergut (2) stromabwärts ausgeschleust wird.
